Europäisches Patentamt

European Patent Office

Office européen des brevets

(11) Veröffentlichungsnummer: **0 305 578 B1**

(12) **EUROPÄISCHE PATENTSCHRIFT**

(45) Veröffentlichungstag der Patentschrift: **03.06.92**

(21) Anmeldenummer: **87112910.2**

(22) Anmeldetag: **03.09.87**

(51) Int. Cl.⁵: **B60R 1/06**

(54) **Haltevorrichtung für einen abklappbaren Aussenspiegel für Fahrzeuge.**

(43) Veröffentlichungstag der Anmeldung:
**08.03.89 Patentblatt 89/10**

(45) Bekanntmachung des Hinweises auf die
Patenterteilung:
**03.06.92 Patentblatt 92/23**

(84) Benannte Vertragsstaaten:
**AT BE CH DE ES FR GB IT LI LU NL SE**

(56) Entgegenhaltungen:
**DE-A- 3 108 627**
**DE-A- 3 220 893**

(73) Patentinhaber: **HOHE KG**
**Hauptstrasse 36**
**W-6981 Collenberg(DE)**

(72) Erfinder: **Polzer, Herwig**
**Untere Steige Weg 13**
**W-8760 Miltenberg(DE)**
Erfinder: **Fuchs, Hans-Joachim**
**Gartenstrasse 12**
**W-6981 Dorfprozelten(DE)**
Erfinder: **Seubert, Richard**
**Meister-Hermann-Str. 8**
**W-8760 Miltenberg(DE)**

(74) Vertreter: **Zinngrebe, Horst, Dr.rer.nat.**
**Saalbaustrasse 11**
**W-6100 Darmstadt(DE)**

**Beschreibung**

Die Erfindung betrifft einen Außenspiegel für ein Fahrzeug mit einem Spiegelfuß und einem relativ zum Spiegelfuß aus einer Gebrauchslage nach vorne und hinten abklappbaren Spiegelgehäuse, welches mittels einer Zugfeder in Gebrauchslage am Spiegelfuß gehalten ist, wobei ein Spiegelgehäuserand gegen den Rand des Spiegelfußes anliegt sowie mit einem Rastglied, wobei in einer definierten Endlage des angeklappten Spiegelgehäuses ein Rastorgan und das Rastglied lösbar eingerastet sind.

Der aus der DE-A-32 20 893 bekannte Außenspiegel besitzt einen am Spiegelfuß angelenkten Rückhaltehebel, welcher unter Beaufschlagung durch eine Feder in Gebrauchslage des Spiegelgehäuses gegen dessen rückwärtige Innenwand anliegt und in der voll nach hinten abgeklappten Endlage des Spiegelgehäuses in eine Raststellung vorspringt. In der Raststellung unterfasst der Rückhaltehebel den vom Spiegelfuß abgehobenen Spiegelgehäuserand und verhindert dadurch das Zurückklappen des Spiegelgehäuses unter der Wirkung der zwischen Spiegelfuß und Spiegelgehäuse eingespannten Feder.

Zum Entriegeln muß der Rückhaltehebel von Hand nach rückwärts gedrückt werden, so daß das Spiegelgehäuse sogleich kräftig in die Gebrauchslage zurückklappt. Bei dem manuellen Entriegeln besteht die Gefahr, daß die Finger zwischen Spiegelgehäuserand und Spiegelfußklappe eingeklemmt werden können.

Aus dem Dokument DE-A-31 08 627 ist ein Außenspiegel bekannt, dessen Spiegelgehäuse aus einer abgeklappten Stellung von Hand in die Gebrauchslage übergeführt werden kann.

Das Spiegelgehäuse ist mit dem Spiegelfuß über zwei mit Abstand voneinander angeordneten Raststellen verbunden, wobei in beiden Raststellen jeweils ein mit dem Fuß verbundener Achsbolzen vorgesehen ist, der federelastisch von einem hakenartigen Rastelement umgriffen wird, welches am Spiegelgehäuse ausgebildet ist. Ein Sicherheitsrisiko besteht bei diesem Außenspiegel nicht, weil das abgeklappte Spiegelgehäuse von keiner in Gebrauchslage desselben gerichteten Rückstellkraft beaufschlagt ist.

Der Erfindung liegt daher die Aufgabe zugrunde, den das abgeklappte Spiegelgehäuse in der definierten Endlage haltenden Mechanismus so zu verbessern, daß eine Verletzungsgefahr durch eingeklemmte Finger oder dergleichen möglichst ausgeschlossen bleibt.

Bei dem eingangs genannten Außenspiegel ist dazu erfindungsgemäß vorgesehen, daß das Rastorgan sowie das Rastglied auf dem Rückkehrweg des Spiegelgehäuses aus der Endlage in federbelasteter Anlage aneinander gelangen. Damit wird die Rückkehrbewegung des Gehäuses aus einer Klapplage in die Gebrauchslage unter der Wirkung der Feder verzögert, so daß das gefährliche Zurückschnappen des Spiegelgehäuses in die Gebrauchslage beseitigt ist.

Um die Verletzungsgefahr zuverlässiger auszuschließen, ist in Weiterbildung der Erfindung vorgesehen, daß das Rastorgan einen Anschlag derart aufweist, daß bei Anlage des Rastgliedes an dem Anschlag der Spiegelgehäuserand einen Sicherheitsabstand zum benachbarten Rand des Spiegelfußes besitzt. Dieser Sicherheitsabstand kann so bemessen sein, daß ein Einklemmen von Fingern zwischen Spiegelgehäuserand und Spiegelfuß nicht eintreten kann. Dieses Merkmal der Erfindung ist besonders dann von Bedeutung, wenn sich das Spiegelgehäuse unbeabsichtigt aus seiner abgeklappten Endlage befreien sollte oder überhaupt keine definierte abgeklappte Endlage besitzt oder erreicht, und dann nach Art einer Peitsche in Richtung seiner Gebrauchslage zurückschwenkt. Der Anschlag kann vom Spiegelgehäuse erst durch erneute Krafteinwirkung auf das Spiegelgehäuse überwunden werden, wonach dann das Spiegelgehäuse in die Gebrauchsstellung klappt.

Die Erfindung ermöglicht mehrere Ausführungsformen. So kann das Rastglied am Spiegelfuß oder am Spiegelgehäuse verankert sein, wobei dann das Rastorgan am jeweils anderen Bauteil des Außenspiegels, also am Spiegelgehäuse oder Spiegelfuß befestigt ist. Ferner empfiehlt sich als eine erste Ausführungsform, dem Rastglied die Form eines axial doppelkegelig durchbohrten weichelastischen Einsatzes beispielsweise für eine spiegelfußseitige Öffnung des Spiegelgehäuses zu geben, wobei die Durchbohrung eine kugelige Erweiterung aufweist, und das Rastorgan ein am Ende ballig gestalteter am Spiegelfuß gelenkter Arm ist, der die Durchgangsbohrung durchdringt. In der abgeklappten Endlage des Spiegelgehäuses ist das ballige Ende in der Erweiterung lösbar eingefangen. Der Arm trägt etwa in seiner Mitte den Anschlag, der eine ebenfalls ballige Verdickung ist, welcher in die Erweiterung lösbar einrasten kann.

Gemäß einer zweiten Ausführungsform der Erfindung hat das Rastglied die Form eines Federstabes, der die spiegelfußseitige Öffnung des Spiegelgehäuses überspannt und auf der Oberseite eines plattenförmigen, am Spiegelfuß befestigten Rastorgans reitet. Die Oberseite des plattenförmigen Rastorgans weist am freien Ende eine erste Nut auf, in welche der Federstab eindringt, wenn das Spiegelgehäuse die abgeklappte Endlage erreicht hat. Zweckmäßig ist das plattenförmige Rastorgan von einer aus dem Spiegelgehäuse gegenüber dem Federstab vorstehenden Rippe unterfaßt. Als Anschlag dient eine zweite Nut für den Federstab, die in die Oberseite des Rastorgans etwa in deren Mitte eingebracht ist.

Die letztgenannte Ausführungsform der Erfindung kann in der Weise ausgestaltet sein, daß statt der Rippe ein die spiegelfußseitige Gehäuse-Öffnung überspannender, sich parallel zum ersten Federstab erstreckender zweiter Federstab vorgesehen ist, so daß das dann als Schwenkarm ausgebildete Rastorgan von beiden Federstäben umgriffen ist. An dem Rastorgan sind zwei beabstandete, in Richtung auf beide Federstäbe radial vorstehende Verdickungen ausgebildet, von denen die äußere in der Endlage des Gehäuses von den Federstäben hintergriffen ist und die innere als Anschlag dient, gegen den die Federstäbe anlaufen. Statt der Federstäbe kann alternativ eine Buchse vorgesehen sein, die mit Spiel auf dem Arm reitet und mit Federsegmenten an ihm anliegt.

Nach einer weiteren Ausführungsform ist das Rastglied eine am Spiegelgehäuse schwenkbar befestigte Scheibe mit axial vorstehender Nase, welche gegen eine mit einer der Nase entsprechenden Nut versehene Scheibe am freien Ende eines als Schwenkarm ausgebildeten Rastorgans unter Federbelastung anliegt. Die abgeklappte Endstellung ergibt sich, wenn die Nase in der Nut lösbar eingefangen ist. Beide Scheiben sitzen zweckmäßig auf einem gemeinsamen Zapfen und werden von einer auf dem Zapfen vorgesehenen Tellerfeder axial belastet. Dabei verläuft die Achse des Zapfens zweckmäßig im wesentlichen quer zu einer Ebene, die durch eine das Spiegelglas des Außenspiegels umschließende Öffnung des Spiegelgehäuses definiert ist.

Diese Ausführungsform der Erfindung kann in der Weise abgeändert werden, daß statt der Nase mit zugehöriger Nut eine Reibscheibe zwischen die beiden Scheiben des Rastgliedes und des Rastorganes zwischengelegt ist, wobei die axiale Federbelastung entfallen kann. Der Zapfen hält das Scheibenpaket unter solchem Druck zusammen, daß die Haftreibung zwischen wenigstens einer Oberfläche der Reibscheibe und der gegenüberliegenden Oberfläche der Scheibe des Rastgliedes oder des Rastorgans größer ist als die Rückholkraft der Zugfeder für das Spiegelgehäuse, so daß das Spiegelgehäuse in der erreichten Endlage des Abklappens gehalten ist, wobei das Rastglied und das Rastorgan einen im wesentlichen gestreckten Winkel miteinander einschließen.

Weitere Ausführungsbeispiele der Erfindung sind in den Unteransprüchen angegeben.

Die Erfindung wird nachstehend anhand einiger Ausführungsbeispiele im einzelnen beschrieben, wobei auf die beigefügte Zeichnung Bezug genommen wird.

Es zeigen:

Fig. 1    Die Draufsicht auf ein Spiegelgehäuse in Gebrauchslage, dessen spiegelfußseitiges Ende horizontal geschnitten ist, wobei der Spiegelfuß schematisch angedeutet ist;

Fig. 2    eine der Fig. 1 ähnliche Darstellung, wobei das Spiegelgehäuse jedoch in der Endlage des nach rückwärts abgeklappten Spiegelgehäuses gehalten ist;

Fig. 3    eine der Fig. 1 ähnliche Darstellung einer zweiten Ausführungsform mit in Gebrauchstellung befindlichem Spiegelgehäuse;

Fig. 4    eine der Fig. 2 ähnliche Darstellung der Ausführungsform nach Fig. 4, wobei das Spiegelgehäuse in der Endlage der Abklappung nach hinten gehalten ist;

Fig. 5    die Ansicht des Schnittes C-C aus Fig. 3 zur Erläuterung einer Einzelheit;

Fig. 6    eine der Fig. 1 ähnliche Darstellung einer dritten Ausführungsform, bei der das Spiegelgehäuse sich in Gebrauchslage befindet;

Fig. 7    eine der Fig. 2 ähnliche Darstellung der dritten Ausführungsform, wobei das Spiegelgehäuse in der Endstellung der Abklappung nach hinten gehalten ist;

Fig. 8    eine Teilansicht aus Richtung U in fig. 6;

Fig. 9    eine der Fig. 1 ähnliche Darstellung einer vierten Ausführungsform, bei der das Spiegelgehäuse sich in Gebrauchslage befindet;

Fig. 10    eine der Fig. 2 ähnliche Darstellung der vierten Ausführungsform, bei der das Spiegelgehäuse in der Endlage der Abklappung nach hinten gehalten ist;

Fig. 11    die vergrößerte Darstellung einer Einzelheit gemäß dem Ausschnitt W aus Fig. 9;

Fig. 12    eine vergrößerte Darstellung des Rastgliedes aus Richtung V in Fig. 10;

Fig. 13    eine der Fig. 1 ähnliche Darstellung einer fünften Ausführungsform, bei der das Spiegelgehäuse im Sicherheitsabstand gehalten ist;

Fig. 14    eine der Fig. 2 ähnliche Darstellung der fünften Ausführungsform;

Fig. 15    eine vergrößerte Detaildarstellung einer Einzelheit im Schnitt B-B aus Fig. 14;

Fig. 16    eine der Fig. 1 ähnliche Darstellung einer sechsten Ausführungsform, bei der das Spiegelgehäuse sich in Gebrauchsstellung befindet;

Fig. 17 eine der Fig. 2 ähnliche Darstellung der sechsten Ausführungsform, bei der das Spiegelgehäuse in der Endstellung der hinteren Abklappung gehalten ist;

Fig. 18 eine der Fig. 2 ähnliche Darstellung der sechsten Ausführungsform, bei der das Spiegelgehäuse jedoch nach vorne abgeklappt ist;

Fig. 19 eine vergrößerte Darstellung einer Einzelheit im Schnitt A-A aus Figur 16;

Fig. 20 eine der Fig. 18 ähnliche Darstellung einer siebenten Ausführungsform, bei der das Spiegelgehäuse nach vorne abgeklappt ist;

Fig. 21 eine der Fig. 1 ähnliche Darstellung einer achten Ausführungsform;

Fig. 22 eine der Fig. 2 ähnliche Darstellung der achten Ausführungsform;

Fig. 23 eine schematische vergrößerte Ansicht einer Einzelheit aus der Richtung Z gemäß Fig. 21;

Fig. 24 eine der Fig. 1 entsprechende Darstellung einer neunten Ausführungsform, bei der das Spiegelgehäuse sich in Gebrauchslage befindet;

Fig. 25 eine der Fig. 2 ähnliche Darstellung der neunten Ausführungsform, bei der das Spiegelgehäuse in der Endlage der Abklappung nach hinten gehalten ist;

Fig. 26 die schematische Darstellung einer Einzelheit im Schnitt längs der Linie E-E aus Fig. 24;

Fig. 27 eine vergrößerte Darstellung einer Einzelheit in Ansicht aus Richtung Y gemäß Fig. 24;

Fig. 28 eine vergrößerte Darstellung der Einzelheit aus Fig. 27, jedoch in Ansicht X aus Fig. 25;

Fig. 29 eine der Fig. 1 ähnliche Darstellung einer zehnten Ausführungsform;

Fig. 30 eine der Fig. 2 ähnliche Darstellung der zehnten Ausführungsform und

Fig. 31 eine vergrößerte Darstellung einer Einzelheit aus Fig. 29 im Schnitt D-D.

In den nachstehend beschriebenen Ausführungsbeispielen eines Außenspiegels sind die funktionsgleichen Teile mit Bezugszeichen versehen, deren Zahl vor dem Punkt gleich ist, und deren Zahl hinter dem Punkt der jeweiligen Ausführungsform zugeordnet ist.

Ferner ist der Spiegelfuß jeweils nur schematisch im Schnitt als Hohlblock dargestellt. er hat bis auf die im einzelnen erwähnten Besonderheiten übliche Form.

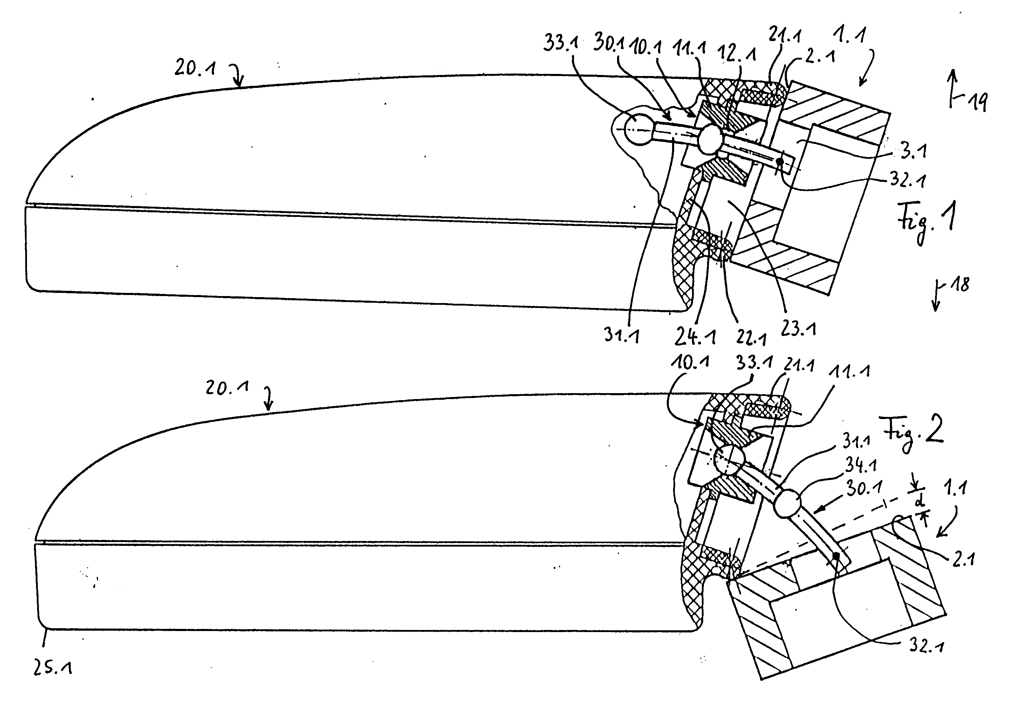

So weist der Spiegelfuß 1.1 der ersten Ausführungsform eine zusammenhängende Randpartie 2.1 auf, gegen welche der Rand des Spiegelgehäuses 20.1 in dessen Gebrauchslage anliegt. In den dargestellten horizontalen Schnitten sind der vordere Randabschnitt 21.1 sowie der hintere Randabschnitt 22.1 an ihrem Ende abgerundet, so daß sie beim Abklappen des Spiegelgehäuses nach vorne (Pfeil 19 in Fig. 1) oder hinten (Pfeil 18, Fig. 1) auf dem jeweiligen Teil der Randpartie 2.1 abrollen können.

Nicht dargestellt ist eine übliche Zugfeder, deren eines Ende am Spiegelfuß 1.1 und deren anderes Ende am Spiegelgehäuse 20.1 verankert ist und die sowohl sicheren Halt des Spiegelgehäuses 20.1 in Gebrauchslage am Spiegelfuß 1.1 wie auch dessen Rückkehr in die Gebrauchslage nach Abklappen nach vorne oder hinten gewährleistet.

Der Spiegelfuß 1.1 weist innerhalb des von der Randpartie 2.1 umschlossenen Bereichs einen Schlitz 3.1 auf, in welchem ein leicht nach hinten gebogener Arm 31.1 eines im Ganzen mit 30.1 bezeichneten Rastorgans nach vorne und hinten um einen sich parallel zur Klappachse des Spiegelgehäuses 20.1 erstreckenden Zapfen 32.1 schwenkbar gehalten ist. Der Arm 31.1 weist an seinem freien Ende, das in Gebrauchslage des Spiegelgehäuses gemäß Fig. 1 in dessen Inneres vorsteht, eine ballige Verdickung 33.1 auf. Etwa mittig zwischen dem Zapfen 32.1 und der balligen Verdickung 33.1 sitzt als Anschlag 34.1 eine weitere ballige Verdickung.

Das Spiegelgehäuse 20.1 weist eine spiegelfußseitige Öffnung 23.1 auf, welche seitlich durch den zusammenhängenden Rand mit Randabschnitten 21.1, 22.1 und zum Inneren des Spiegelgehäuses 20.1 von einer Wand 24.1 abgeschlossen ist. Die Wand 24.1 besitzt eine Öffnung, in welcher eine zylindrischer Kunststoffkörper 11.1 als im Ganzen mit 10.1 bezeichnetes Rastglied gehalten ist. Der Kunststoffkörper 11.1 weist eine axiale Durchgangsöffnung auf, welche nach beiden gegenüberliegenden Seiten kegelförmig aufgeweitet ist und in der Mitte eine kugelig geformte Erweiterung 12.1 besitzt. Der Kunststoffkörper 11.1 ist wenigstens im Bereich der Erweiterung 12.1 radial elastisch. Die Erweiterung 12.1 ist so geformt, daß sie die ballige Verdickung 33.1 sowie den Anschlag 34.1 formschlüssig umschließt, wenn diese bei Abklappen des Spiegelgehäuses 20.1 nach hinten bzw. beim Zurückklappen in die Erweiterung 12.1 einrasten.

Gemäß Fig. 2 ist die hintere Endlage des nach hinten abgeklappten Spiegelgehäuses 20.1 durch Einrasten der Verdickung 33.1 in die Erweiterung 12.1 definiert. Aus dieser Endlage kann das Spiegelgehäuses 20.1 durch nach vorne gerichteten Schlag etwa auf dessen äußeren Rand 25.1 befreit werden, woraufhin das Spiegelgehäuses 20.1 unter der Wirkung der erwähnten Zugfeder nach vorne in Richtung seiner Gebrauchslage klappt. Wenn während des Nach-Vorne-Schwenkens des Spiegelgehäuses 20.1 der ballige Anschlag 34.1 in der Erweiterung 12.1 eingefangen ist, bleibt das Spiegelgehäuse 20.1 in einer Stellung relativ zum Spiegelfuß 1.1 stehen, bei der der vordere, abgehobene Randabschnitt 21.1 den Sicherheitsabstand d zur benachbarten Randpartie 2.1 des Spiegelfußes 1.1 einhält. Der Sicherheitsabstand d kann etwa 2 cm betragen und soll verhindern, daß Finger zwischen dem vorderen Randabschnitt 21.1 und der benachbarten Randpartie 2.1 eingeklemmt werden können. Durch erneuten, nach vorne gerichteten Schlag auf das Spiegelgehäuse 20.1 kommt der Anschlag 34.1 aus der Erweiterung 12.1 frei und das Spiegelgehäuse klappt in die Gebrauchslage.

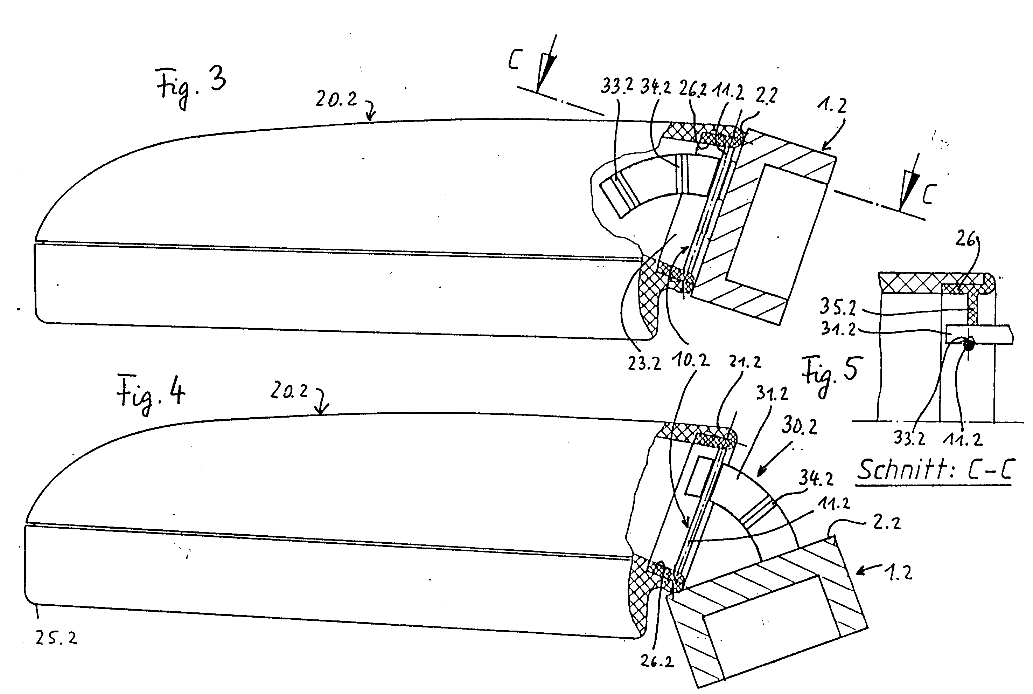

Bei dem in den Fig. 3 bis 5 dargestellten zweiten Ausführungsbeispiel der Erdindung ist das Rastorgan 30.2 als am Spiegelfuß 1.2 befestigte, in das Innere des Spiegelgehäuses 20.2 ragende, nach rückwärts gebogene Rastplatte 31.2 ausgebildet, die sich zwischen einem Steg 35.2 und einem Federstab 11.2 als Rastglied 10.2 hindurch erstreckt. Der Steg 35.2 erhebt sich von unten aus einem Einsatzring 262, welcher in die spiegelfußseitige Öffnung 23.2 eingesetzt ist, und unterfaßt die Rastplatte 31.2 gegenüber dem Federstab 11.2. Der Federstab 11.2 überspannt die Öffnung 23.2 und ist an seinen gegenüberliegenden Enden in dem Einsatzring 26.2 so verankert, daß er wie nachfolgend ersichtlich quer zur Rastplatte 31.2 durch Verbiegen beweglich ist.

Die Rastplatte 31.2 besitzt in ihrer zum Federstab 11.2 weisenden Oberfläche zwei Rastkerben 33.2., 34.2, von denen die erste Rastkerbe 33.2 in der Nähe des freien Endes der Rastplatte 31.2 und die zweite Rastkerbe 34.2 als Anschlag etwa in der Mitte der Rastplatte 31.2 ausgebildet sind.

Obwohl in den Fig. 3 bis 5 nicht dargestellt, kann eine die Öffnung 23.2 zum Inneren des Spiegelgehäuses 20.2 begrenzende Wand mit einer Öffnung für den Durchtritt der Rastplatte 31.2 vorgesehen sein. Wenn das Spiegelgehäuse 20.2 durch Krafteinwirkung von vorne gegen die Wirkung der nicht dargestellten Zugfeder nach hinten abklappt, reitet der Federstab 11.2 auf der Oberseite der Rastplatte 31.2 in Richtung auf deren freies Ende zu. Wenn der Federstab 11.2 in die äußere, erste Rastkerbe 33.2 einfällt, ist die hintere Endlage des abgeklappten Gehäuses 20.2 erreicht, welches in dieser durch Zusammenwirken des Federstabs 11.2 mit der ersten Rastkerbe 33.2 gehalten bleibt. Zum Befreien des Gehäuses 20.2 aus der hinteren abgeklappten Endlage wird auf dessen spiegelfußfernes Ende 25.2 ein nach vorne gerichteter Schlag ausgeführt, der den Federstab 11.2 aus der ersten Rastkerbe 33.2 befreit, so daß das Gehäuse 20.2 unter der Wirkung der Zugfeder soweit auf den Spiegelfuß 1.2 zuschwenkt, bis der Federstab 11.2 in die zweite Rastkerbe 34.2 einfällt. In dieser Stellung wird das Spiegelgehäuse 20.2 erneut festgehalten, wobei dessen vorderer Randabschnitt 21.2 in nicht dargestellter Weise den Sicherheitsabstand d zu der Randpartie 2.2 hält. Durch erneuten Schlag nach vorne auf den äußeren Rand 25.2 kann der Federstab 11.2 aus der zweiten Rastkerbe 34.2 befreit werden und das Spiegelgehäuse unter der Wirkung der Zugfeder in die in Fig. 3 dargestellte Gebrauchslage zurückkehren.

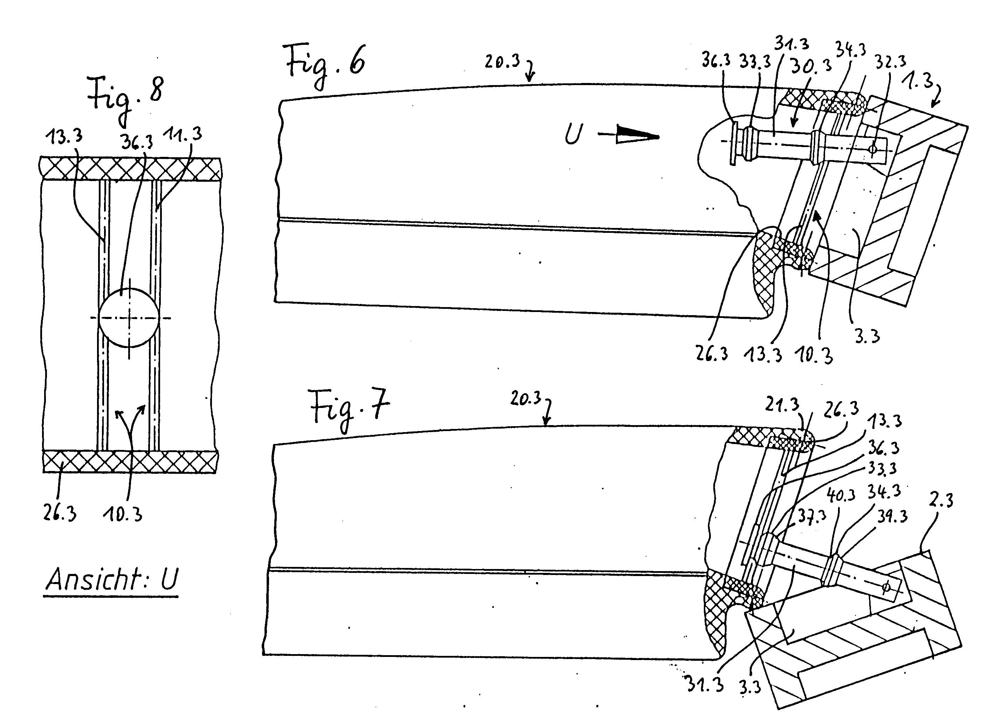

Bei dem in Fig. 6 bis 8 dargestellten dritten Ausführungsbeispiel der Erfindung ist das Rastorgan 30.3 wieder ein am Spiegelfuß 1.3 angelenkter und um eine zur Klappachse des Spiegelgehäuses 20.3 parallele Achse verschwenkbarer Arm 31.3. Dazu weist der Spiegelfuß 1.3 eine Ausnehmung 3.3 auf, in welcher der Arm 31.3 um einen Zapfen 32.3 verschwenkbar gehalten ist. Ähnlich wie bei der zweiten Ausführungsform übergreift den Arm 31.3 ein erster Federstab 11.3, der zur Vereinfachung der Darstellung in Fig. 6 und 7 nicht eingetragen, jedoch aus Fig. 8 zu erkennen ist. Parallel zu dem ersten Federstab 11.3 erstreckt sich unterhalb des Armes 31.3 ein zweiter Federstab 13.3, welcher wie der erste Federstab in einem Einsatzring 26.3 an gegenüberliegenden Enden gehalten ist. Beide Federstäbe 11.3 und 13.3 bilden zusammen das Rastglied 10.3 Der sich zwischen den beiden Federstäben 11.3 und 13.3 hindurch erstreckende Arm 31.3 besitzt in der Nähe seines freien Endes eine radiale Verdickung 33.3, deren Form in Fig. 11 gezeigt ist. Am Ende schließt der Arm 31.3 mit einer radial erweiterten Stoppplatte 36.3 ab, deren radiale Abmessung größer ist als der größtmögliche Zwischenraum zwischen den nach oben und unten federn nachgiebigen Federstäben 11.3 und 13.3. Etwa in der Mitte des Armes 31.3 ist als Anschlag eine weitere Verdickung 34.3 ausgebildet, die ähnliche Querschnittsform wie die Verdickung 33.3 aufweist.

Das nach hinten abgeklappte Spiegelgehäuse 20.3 wird in der hinteren Endlage dadurch gehalten, daß die Federstäbe 11.3 und 13.3 zwischen der hinteren Verdickung 33.3 und der Stoppplatte 36.3 eingefangen bleiben. Das Einrasten der Federstäbe 11.3 und 13.3 hinter die äußere Verdickung 33.3 wird erleichtert durch eine relative flache, auf den Spiegelfuß 1.3 zuweisende Auflaufflanke 37.3, gegenüber welcher die vom Spiegelfuß 1.3 wegweisende Auflaufflanke 38.3 eine wesentlich größere Steigung besitzt. Das Spiegelgehäuse 20.3 kann aus der abgeklappten Endlage wider durch nach vorne gerichteten Schlag auf dessen äußeres Ende befreit werden, aufgrund dessen die Federstäbe 11.3 und 13.3 über die äußere Verdickung 33.3 durch seitliches Ausweichen gelangen können. Die Zugfeder schwenkt das aus der abgeklappten Endlage befreite Spiegelgehäuse 20.3 in Richtung auf seine Gebrauchslage, bis die beiden Federstäbe 11.3 und 13.3 gegen die steile, vom Spiegelfuß 1.3 abgewandte Auflaufflanke 40.3 des Anschlags 34.3 anlaufen. In dieser Stellung wird das Spiegelgehäuse 20.3 gehalten, bei der der abgehobenen vordere Randabschnitt 21.3 den Sicherheitsabstand d zu der benachbarten Randpartie 2.3 behält. Durch erneuten Schlag nach vorne streichen die Federstäbe 11.3 und 13.3 durch seitliches Ausweichen auch über den Anschlag 34.3, woraufhin das Spiegelgehäuse 20.3 in die in Fig. 6 dargestellte Gebrauchslage zurückkehrt. Wie dargestellt, besitzt der Anschlag 34.3 eine spiegelfußnahe Auflaufflanke 39.3 von wesentlich geringerer Steigung als die spiegelfußferne Auflaufflanke 40.3. Man erkennt an diesem Ausführungsbeispiel der Erfindung, daß das Spiegelgehäuse über die abgeklappte Endlage hinaus nicht weiter abgeschwenkt werden kann, was durch die Stoppplatte 36.3 verhindert wird, so daß der Arm 31.3 stets zwischen den Federstäben 11.3 und 13.3 eingefangen bleibt.

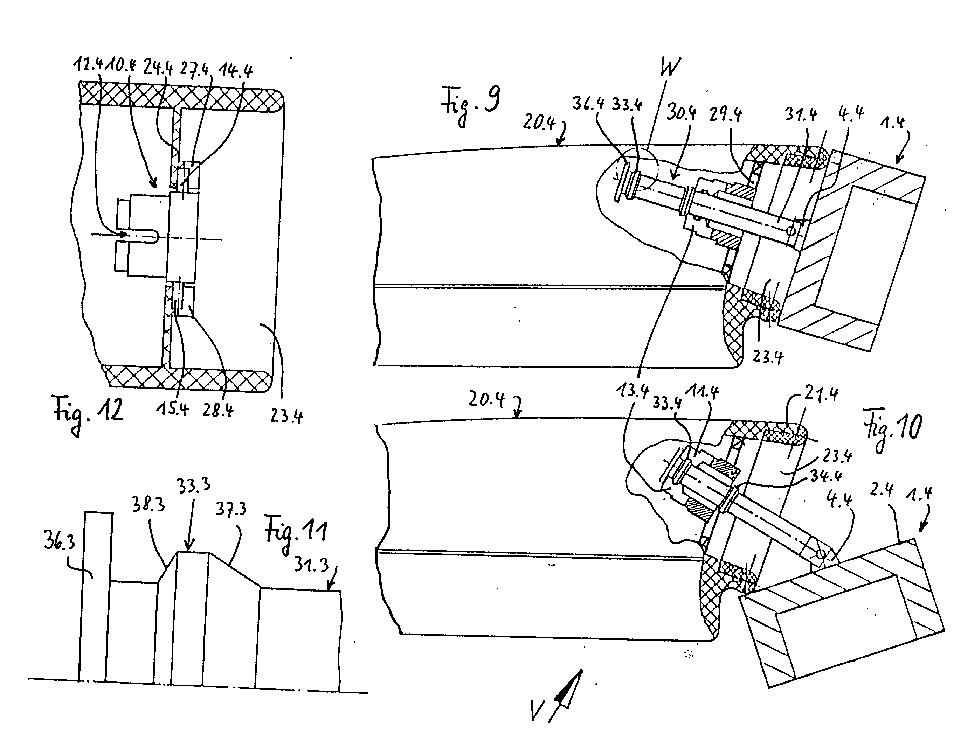

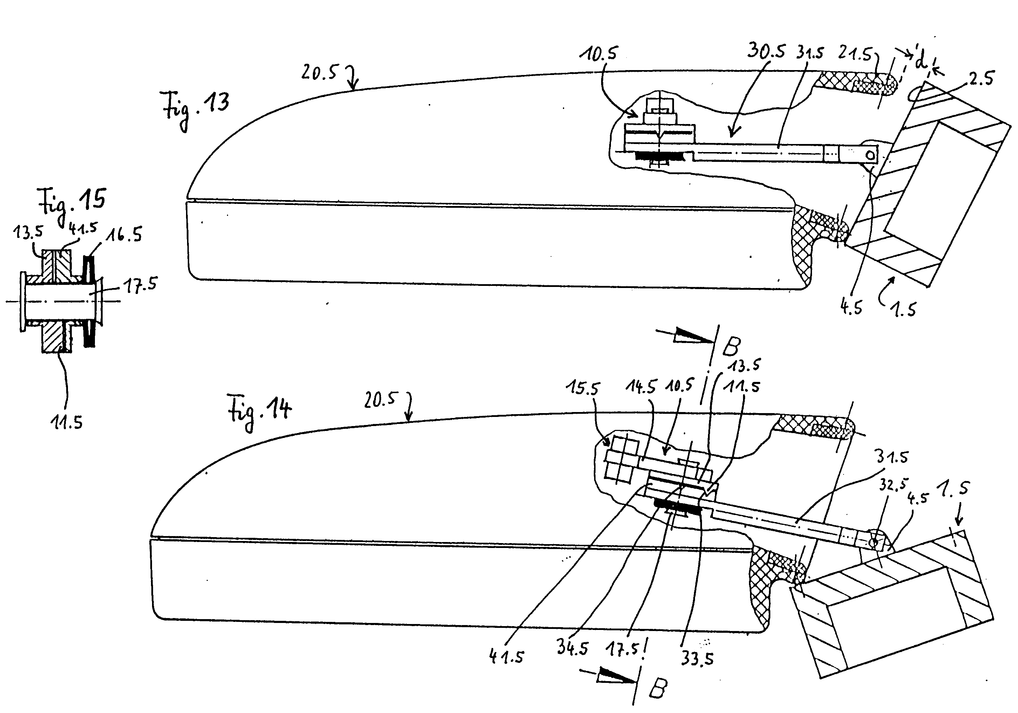

Bei der in Fig. 9 bis 12 dargestellten vierten Ausführungsform der Erfindung ist ein Rastorgan 30.4 vorgesehen, das dem Rastorgan 30.3 gleicht, so daß zur Vermeidung von Wiederholungen auf die vorstehende Beschreibung des Rastorgans 30.3 auch für dieses Ausführungsbeispiel Bezug genommen werden kann. Das Rastorgan 30.4 ist beim vierten Ausführungsbeispiel an einem aus dem Spiegelfuß 1.4 in Richtung auf das Spiegelgehäuse 20.4 vorstehenden Ohr 4.4 schwenkbar befestigt. Der wesentliche Unterschied zu der vorstehend beschriebenen Ausführungsform der Erfindung besteht in einer anderen Ausführung des Rastgliedes 10.4. Während bei der dritten Ausführungsform das Rastglied 10.3 durch die beiden parallelen Federstäbe 11.3 und 13.3 gebildet ist, besteht bei der vierten Ausführungsform das Rastglied 10.4 aus einer axial durchbohrten Buchse, welche in einer die spiegelfußseitige Öffnung 23.4 zum Inneren des Spiegelgehäuses 20.4 begrenzenden Wand 24.4 mittels seitlich abstehender, gegenüberliegender, und in aus der Wand 24.4 ausgeformten Lagern 27.4, 28.4 aufgenommenen Zapfen 14.4, 15.4 schwenkbar gelagert ist. Das buchsenförmige Rastglied 10.4 ragt in das Innere des Spiegelgehäuses 20.4 vor und seine Schwenkbarkeit wird duch eine Öffnung 29.4 in der Wand 24.4 gewährleistet. Das buchsenförmige Rastglied 10.4 ist axial durchbohrt und umgibt mit Abstand den Arm 31.4 des Rastorgans 30.4. Das Rastglied 10.4 besitzt vier um den Umfang des Armes 31.4 gleichmäßig verteilte Rastsegmente, von denen die in der Schnittansicht der Fig. 10 gegenüberliegenden Rastsegmente mit 11.4, 13.4 bezeichnet sind. Die Rastsegmente sind durch axiale Einschnitte 12.4 in den Buchsenkörper radial elastisch. Alle Rastsegmente liegen an der Peripherie des Arms 31.4 an und sind auf ihrer dem Arm 31.4 zuweisenden Stirnfläche derart geformt, daß sie die Verdickung 33.4 und/oder den Anschlag 34.4 formschlüssig zwischen sich ergreifen können, wie an den Rastsegmenten 11.4 und 13.4 zu erkennen ist.

Wenn das Spiegelgehäuse 20.4 aus der in Fig. 9 dargestellten Gebrauchslage nach rückwärts abklappt, fahren die Rastsegmente auf der Peripherie des Rastorgans 30.4 in Richtung auf dessen freies Ende zu entlang, bis sie durch Gegenlaufen gegen die Stoppplatte 36.4 ein weiteres Abklappen des Spiegelgehäuses 20.4 nach hinten verhindern. Gleichzeitig, wie Fig. 10. an den Rastsegmenten 11.4, 13.4 zeigt, erfassen alle Rastsegmente die hintere Verdickung 33.4 formschlüssig, so daß das Spiegelgehäuse 20.4 in der abgeklappten Endlage gehalten wird. Aus dieser kann das Spiegelgehäuse 20.4 durch den erwähnten Schlag nach vorne befreit werden, bis die Rastsegmente zwischen sich den Anschlag 34.3 ergreifen. In dieser Stellung hält der abgehobene, vordere Randabschnitt 21.4 den Sicherheitsabstand d zur benachbarten Randpartie 2.4 des Spiegelfußes 1.4. Durch weiteren Schlag nach vorne klappt das Spiegelgehäuse 20.4 unter der Wirkung der erwähnten Zugfeder in seine Gebrauchslage gemäß Fig. 9 zurück.

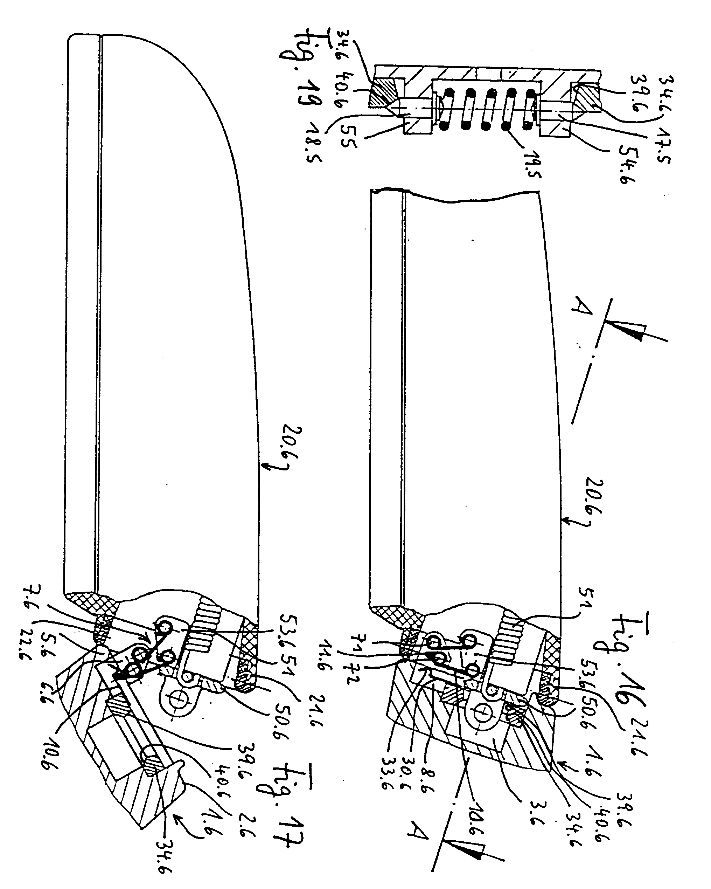

Bie der in den Fig. 13 bis 15 dargestellten fünften Ausführungsform des Außenspiegels ist das Rastorgan 30.5 ein am Spiegelfuß 1.5 mittels eines Ohres 4.5 und eines Zapfens 32.5 angelenkter Arm 31.5, der um eine zur Klappachse des Spiegelgehäuses 20.5 parallele Achse sowie begrenzt nach oben und unten relativ zum Spiegelfuß 1.5 beweglich ist. An sein in das Innere des Spiegelgehäuses 20.5 ragendes, freies Ende ist eine Rastscheibe 41.5 nach vorne weisend angeformt, in deren nach vorne weisende, ebene Fläche zwei umfangmäßig beabstandete Rastkerben 33.5. 34.5 eingebracht sind.

Das Rastglied 10.5 wiest einen relativ kurzen Arm 14.5 auf, welcher an einem Ende über ein Gelenk 15.5 am Inneren des Spiegelgehäuses 20.5 um eine vertikale und eine horizontale Achse schwenkbar befestigt ist. Am anderen Ende ist der Arm 14.5 zu einer zweiten Scheibe 13.5 verbreitert, welche gleichen Radius wie die Rastscheibe 41.5 hat. Aus der auf die Rastscheibe 41.5 zuweisenden ebenen Oberfläche der Scheibe 13.5 steht eine Rastnase 11.5 vor, deren Kontur den Rastkerben 33.5, 34.5 angepaßt ist. Die Scheibe 13.5 sowie die Rastscheibe 41.5 sind von einem Hohlniet 17.5 axial mittig durchdrungen, auf welchem eine die Scheiben 13.5 und 41.5 axial beaufschlagende Spreizfeder 16.5 sitzt.

Wenn das Spiegelgehäuse 20.5 aus der Gebrauchslage nach rückwärts gegen die Wirkung der nichtdargestellten Zugfeder abklappt, verdrehen sich die Rastscheibe 41.5 und die Scheibe 13.5 relative zueinander um den Niet 17.5 solange, bis die Rastnase 11.5 in die erste Rastkerbe 33.5 unter der Wirkung der Feder 16.5 eingefallen ist. Das abgeklappte Spiegelgehäuse 20.5 wird gemäß Fig. 14 in dieser Endlage gehalten, bis ein Schlag nach vorne auf das Spiegelgehäuse 20.5 die Rastnase 11.5 aus der ersten Rastkerbe 33.5 befreit und das Spiegelgehäuse unter der Wirkung der Zugfeder in Richtung auf seine Gebrauchslage zurückkehrt. Auf diesem Wege fällt die Rastnase 11.5 in die zweite als Anschlag wirkende Rastkerbe 34.5 ein und hält das Spiegelgehäuse 20.5 gemäß Fig. 13 so, daß der vordere Randabschnitt 21.5 zu der gegenüberliegenden Randpartie 2.5 den erwähnten Sicherheitsabstand d hält. Ein weiterer Schlag auf das Spiegelgehäuse 20.5 bringt die Rastnase 11.3 aus der zweiten Rastkerbe 34.5, so daß das Spiegelgehäuse in seine Gebrauchslage zurückkehren kann, bei der der vordere Randabschnitt 21.5 auf der zugehörigen Randpartie 2.5 steht. Es versteht sich, daß die Form der Rastkerben 33.5 und 34.5 asymmetrisch etwa entsprechend den verschiedenen Steigungen der Auflaufflächen 37.3, 28.3 gestaltet sein kann. Die Bewegungen des Arms 14.5 während der Abklappbewegung des Spiegelgehäuses 20.5 wird durch das Gelenk 15.5 ermöglicht.

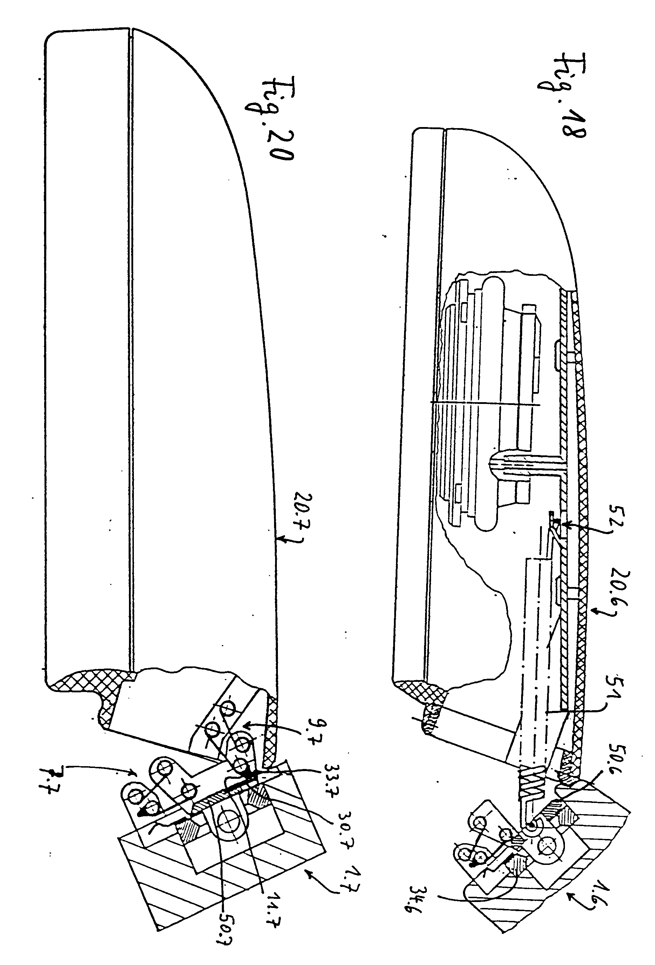

Bei der in den Figuren 16 bis 19 dargestellten sechsten Ausführungsform des Außenspiegels ist das Spiegelgehäuse 20.6 mit dem Spiegelfuß 1.6 über eine Zwischenplatte 50.6 verbunden, an welcher eine Zugfeder 51 mit einem Ende angreift. Das andere Ende der Zugfeder 51 ist am Spiegelgehäuse 20.6 bei 52 (Fig. 18) verankert. Die Zwischenplatte 50.6 ist mit einem hinter der Zugfeder 51 in Richtung auf das Spiegelgehäuse 20.6 vorstehenden Lappen 53.6 versehen. In Richtung auf den Spiegelfuß 1.6 stehen aus der Zwischenplatte 50.6 zwei Pfosten 54.6 und 55 vor, welche in Gebrauchslage des Spiegelgehäuses 20.6 (Fig. 16) in eine Ausnehmung 3.6 im Spiegelfuß 1.6 eintauchen.

An der hinteren Randpartie 5.6 des Spiegelfusses 1.6 steht parallel zum Lappen 53.6 eine Lasche 6.6 vor. Der Lappen 53.6 und die Lasche 6.6 sind über ein Doppelscharniergelenk 7.6 miteinander verbunden, das in seiner grundsätzlichen Bauweise aus den Scharnierbeschlägen für Möbeltüren bekannt ist. Das Scharnier 7.6 verleiht dem Spiegelgehäuse 20.6 die Möglichkeit, um zwei quer zur Schwenkachse versetzte Scharnierzapfen 71, 72 auf der Lasche 6.6 zu verschwenken mit dem Vorteil, daß der hintere Randabschnitt 22.6 des Spiegelgehäuserandes beim Abklappen nicht mehr auf der Randpartie 5.6 abrollt.

Die Einsenkung 3.6 des Spiegelfusses 1.6 ist in Richtung auf das Spiegelgehäuse 20.6 zur Aufnahme eines Anschlagkörpers 34.6 erweitert, welcher eine Durchgangsöffnung zum Durchtritt der Pfosten 54.6, 55 aufweist. Auf dem hinteren Teil der Außenfläche des Anschlagkörpers 34.6 sitzt eine starke, am Ende zu einer auf das Spiegelgehäuse 20.6 zuweisenden Nase 33.6 gebogene Blattfeder 30.6, welche in einer im Spiegelfuß 1.6 ausgebildeten, zum Spiegelgehäuse 20.6 offenen Nische 8.6 beherbergt ist. Von den zu dem Scharniergelenk 7.6 gehörenden Scharnierbändern weist das der Blattfeder 30.6 benachbarte Scharnierband 10.6 an dem zugehörigen, auf der Lasche 6.6 sitzenden Gelenkzapfen 72 eine vorstehende Warze 11.6 auf.

Wenn das Spiegelgehäuse 20.6 nach hinten abklappt, ist seine abgeklappte Endstellung dann erreicht, wenn die Warze 11.6 über die Nase 33.6 unter entsprechender Ausbiegung der Blattfeder 30.6 hinweggeglitten ist und diese wie Fig. 17 hinterfaßt. Dadurch wird das Spiegelgehäuse 20.6 in der abgeklappten Endlage gehalten, bis es aus dieser durch den erwähnten Schlag nach vorne befreit wird.

Der Anschlagkörper 34.6 besitzt eine relativ steile äußere Auflauffläche 39.6 und eine innere, flachere Auflauffläche 40.6, welche den Durchbruch durch den Anschlagkörper 34.6 an beiden gegenüberliegenden Seiten begrenzen. Andererseits sind die Pfosten 54.6 und 55 axial fluchtend durchbohrt, so daß in jeder der Durchbohrungen je ein Rastkörper 17.5, 18.5 axial verschieblich eingesetzt werden kann. Zwischen den beiden inneren Verbreiterungen der Rastkörper 17.5 und 18.5 stützt sich eine Spiralfeder 19.5 ab. Beide Rastkörper 17.5, 18.5 sind, wie Fig. 19 zeigt, an ihren aus dem axial fluchtenden Bohrungen in den Pfosten 54.6 und 55 vorstehenden Enden kegelig abgerundet.

Wenn das Spiegelgehäuse 20.6 nach Befreiung aus seiner hinteren Endlage unter der Wirkung der nichtdargestellten Zugfeder in Richtung auf seine Gebrauchslage zurückschwenkt, treffen die Rastkörper 17.5, 18.5 mit ihren kegeligen Enden auf die gegenüberliegenden steilen Auflaufflächen 39.6 des Rastkörpers 34.6, so daß das Spiegelgehäuse vor der endgültigen Rückkehr in seine Gebrauchslage der art festgehalten wird, daß zwischen dem vorderen Randabschnitt 21.6 und der gegenüberliegenden Randpartie 2.6 der erwähnte Sicherheitsabstand d erhalten bleibt. Erst nach weiterem Schlag nach vorne werden die Rastkörper 17.5, 18.5 axial einwärts gegen die Wirkung der Feder 19.5 gedrängt, so daß die Pfosten 54.6, 55 der Zwischenscheibe 50.6 in die Ausnehmung 3.6 eintauchen können und die Rastkörper 17.5, 18.5 gegen die innere Auflaufflanke 40.6 anliegen, wie Fig. 19 zeigt.

Fig. 18 zeigt das Spiegelgehäuse 20.6 in einer nach vorne relativ zum Spiegelfuß abgeklappten Stellung, bei der die Zugfeder 51 gespannt wird und die Zwischenplatte 50.6 in ihrer Anlage an dem Anschlagkörper 34.6 verbleibt.

Um auch beim Abklappen des Spiegelgehäuses 20.7 nach vorne eine vordere definierte Endlage zu schaffen, zeigt Fig. 20 eine siebte Ausführungsform des Außenspiegels, bei der gegenüber der sechsten Ausführungsform die Zugfeder 51 durch ein Doppelscharniergelenk 9.7 ersetzt ist. Das vordere Gelenk 9.7 sowie das hintere Gelenk 7.7 entsprechen in ihrer Bauweise dem Gelenk 7.6 aus der sechsten Ausführungsform. Ähnlich wie bie letzterer ist auch hier das dem Spiegelfuß 1.7 benachbarte Scharnierband mit einer radial vorstehenden Warze 11.7 versehen, welche in der vorderen Endlage des Spiegelgehäuses 20.7 eine in Richtung auf das Spiegelgehäuse 20.7 vorstehende Nase 33.7 einer hier an der Zwischenplatte 50.7 befestigten Blattfeder 30.7 hintergreift. Im übrigen gleicht die siebente Ausführungsform der vorher beschriebenen sechsten Ausführungsform des Außenspiegels.

Die nachstehend erläuterten weiteren drei Ausführungsbeispiele eines Außenspiegels sehen zunächst zwar keinen Anschlag vor, gegen den das Spiegelgehäuse bei Rückkehr in seine Gebrauchslage aus einer abgeklappten Endstellung unter Einhaltung des Sicherheitsabstandes d gehalten werden könnte. Dennoch wird die Verletzungsgefahr bei diesen Ausführungsformen schon allein dadurch praktisch ausgeschlossen, daß zur Lösung des Spiegelgehäuses aus der abgeklappten Endlage nicht in den Bereich zwischen dem abgehobenen Spiegelgehäuserandabschnitt und dem gegenüberliegenden Teil der Randpartie des Spiegelfusses eingegriffen zu werden braucht.

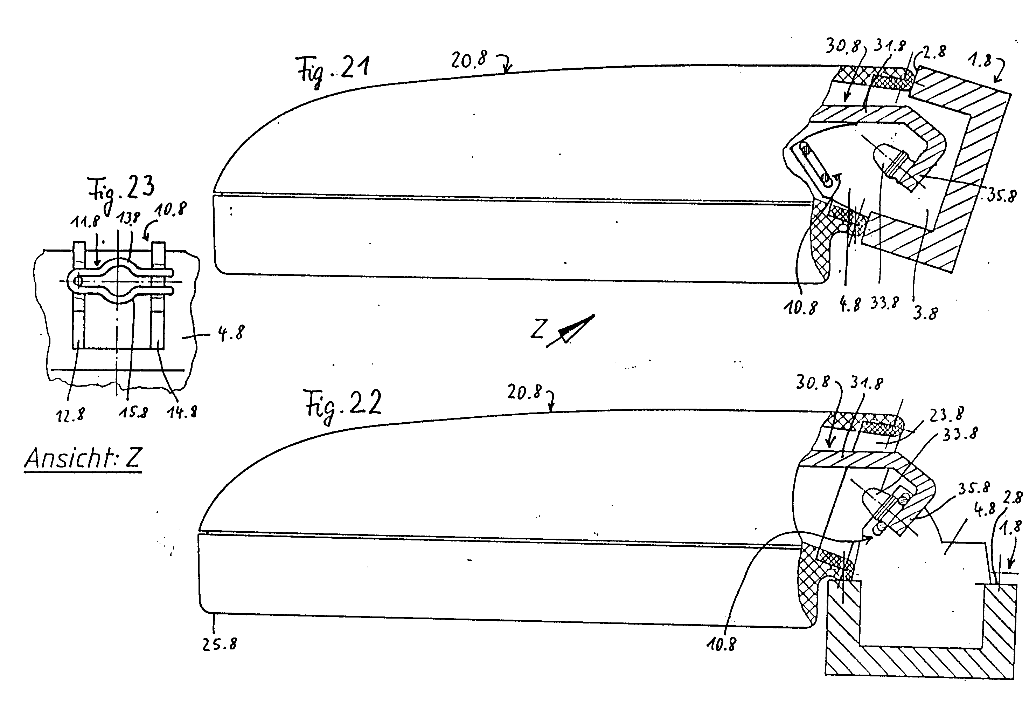

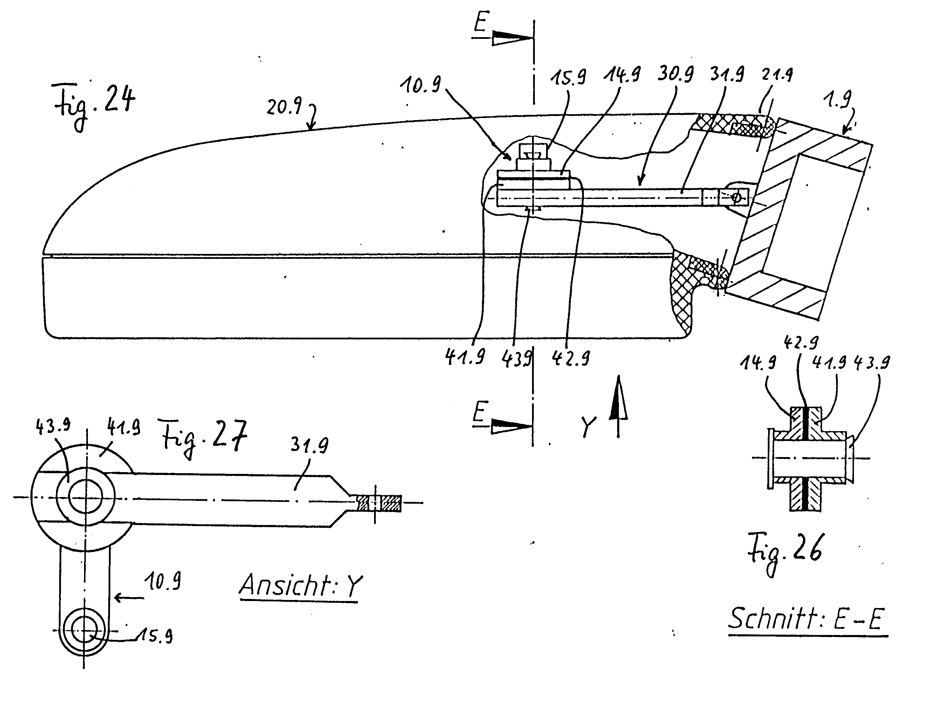

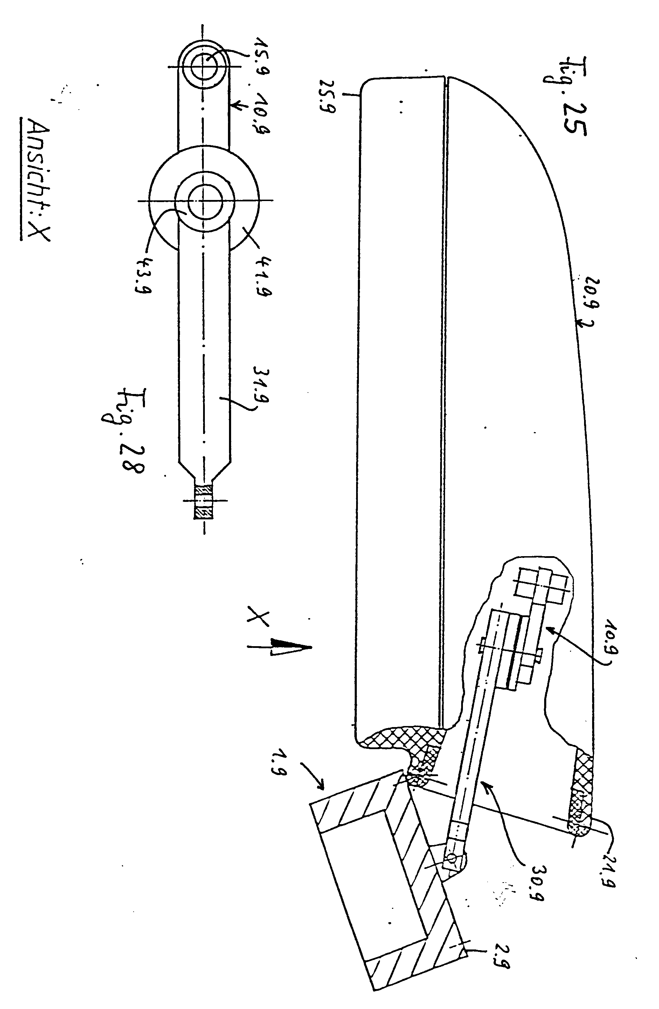

Bei der in den Figuren 21 bis 23 dargestellten achten Ausführungsform ist der Spiegelfuß 1.8 zwischen seinen Randpartien 2.8 mit einer zum Spiegelgehäuse 20.8 offenen Einsenkung 3.8 versehen. Die Einsenkung 3.8 dient zur Aufnahme des spiegelfußseitigen Endes eines im Spiegelgehäuse 20.8 in nichtdargestellter Weise fest an diesem verankerten Rastorgans 30.8 in der in Fig. 21 dargestellten Gebrauchslage des Spiegelgehäuses 20.8 Vertikal neben der Einsenkung 3.8 steht aus dem Spiegelfuß 1.8 in eine spiegelfußseitige Öffnung 23.8 eine Halteplatte 4.8 vor, welche ein noch zubeschreibendes, in Fig. 23 aus Richtung Z dargestelltes Rastglied 10.8 trägt.

Das Rastorgan 30.8 besteht hier aus einem langgestreckten Arm 31.8, dessen nicht dargestelltes Ende an der Innenseite des Bodens des Spiegelgehäuses 20.8 fest vernietet oder entsprechend befestigt ist. Das spiegelfußseitige und aus der Öffnung 23.8 herausragende Ende des Armes 31.8 ist zweimal derart gekröpft, daß der Endabschnitt 35.8 wie dargestellt nach rückwärts zur Öffnung 23.8 weist. Auf dem Endabschnitt 35.8 sitzt ein in die Öffnung 23.8 weisender haubenförmiger Rastkörper 33.8, der an seinem Übergang zum Endabschnitt 35.8 hinterschnitten ist.

Das Rastglied 10.8 weist eine in zwei beabstandeten Stützen 12.8, 14.8 gehaltene Haarnadelfeder 11.8 mit zwei parallelen Schenkeln 13.8, 15.8 auf. Die Schenkel 13.8, 15.8 sind zwischen den Stützen 12.8, 14.8 jeweils nach außen ausgebuchtet, so daß der Kopf des Rastkörpers 33.8 in den Zwischenraum zwischen den Schenkeln 13.8, 15.8 unter Aufweitung derselben hindurchschlüpfen kann.

Wird das Spiegelgehäuse 20.8 nach hinten gegen die Wirkung der Zugfeder abgeklappt, folgt der Abklappbewegung das Rastorgan 30.8. Dessen Rastkörper 33.8 findet in seinem Weg die Aufweitung zwischen den beiden Schenkeln 13.8, 15.8 des Rastgliedes 10.8 und durchdringt diese, so daß die Schenkel in den Hinterschnitt des Rastkörpers 33.8 einfallen. Damit ist die hintere Endlage der Abklappbewegung des Spiegelgehäuses 20.8 nach hinten definiert. Zum Lösen des Spiegelgehäuses 20.8 aus der hinteren Endlage wird wieder ein kurzer nach vorne gerichteter Schlag auf dessen äußeren Rand 25.8 ausgeübt, woraufhin die Schenkel 12.8, 14.8 aus dem Hinterschnitt des Rastkörpers 33.8 freikommen und das Spiegelgehäuse in seine Gebrauchslage unter Wirkung der Zugfeder zurückkehrt.

Diese achte Ausführungsform der Erfindung kann in einfacher Weise mit einem Anschlag versehen werden, indem etwa ein dem Rastglied 10.8 ähnliches Bauteil im Inneren der Einsenkung 3.8 befestigt und auf dem Ende des Rastorgans gegenüber dem Rastkörper 33.8 ein entsprechender Rastkörper aufgesetzt wird.

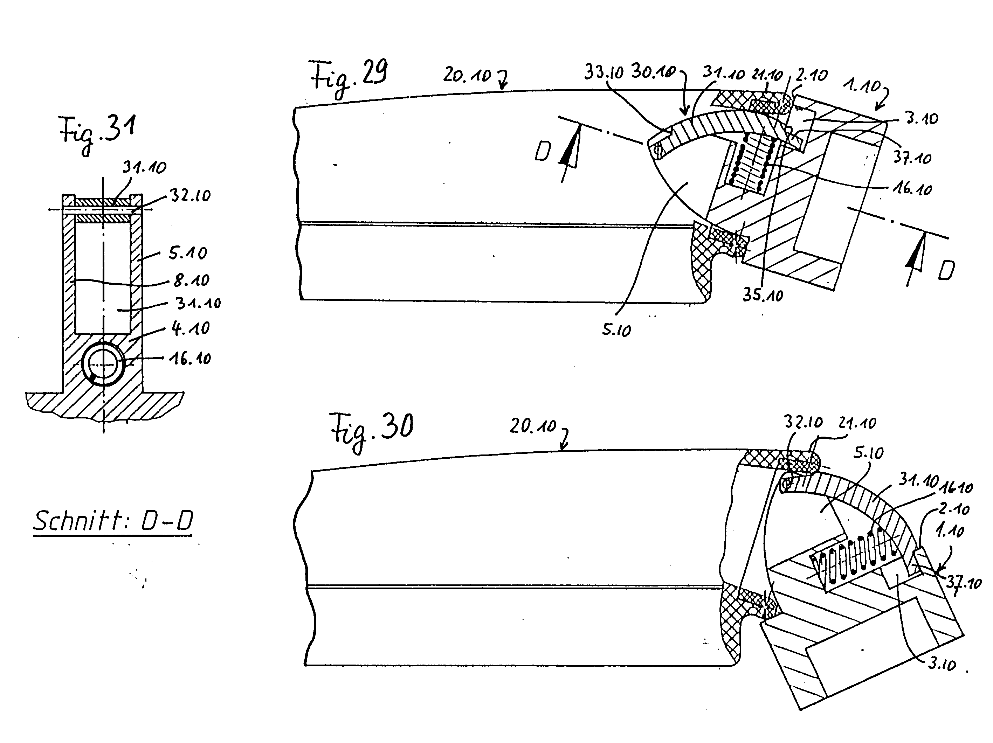

Die in den Figuren 24 bis 28 dargestellte neunte Ausführungsform eines Außenspiegels ist der fünften Ausführungsform darin ähnlich, daß zwei Scheiben miteinander im ständigen flächigen Eingriff stehen. So ist das Rastglied 10.9 um zwei zueinander senkrechte Achsen mittels eines Gelenks 15.9 im Inneren des Spiegelgehäuses 20.9 angelenkt und am freien Ende mit einer Scheibe 14.9 versehen. Andererseits weist das Rastorgan 30.9 welches wie das Rastorgan 30.5 an Spiegelfuß 1.9 über einen Arm 31.9 gelenkig befestigt ist, an dem in das Innere des Spiegelgehäuses 20.9 reichenden freien Ende eine Rastscheibe 41.9 auf. Beide Scheiben 14.9 und 41.9 sitzen auf einem gemeinsamen, sie axial durchsetzenden Niet 43.9, wobei zwischen die beiden gleichgroßen Scheiben 14.9 und 41.9 eine Reibplatte 42.9 zwischengelegt ist. Durch den Niet 43.9 sine die Scheiben 14.9 und 41.9 mit solcher Kraft beidseitig gegen die Reibplatte 42.9 gedrückt, daß die Zugkraft der nicht dargestellten Zugfeder in jeder Abklappstellung des Spiegelgehäuses 20.9 nach vorne gerade nicht ausreicht, um die Haftreibung zwischen der Reibplatte 42.9 mit der Scheibe 14.9 bzw. Rastscheibe 43.9 zu überwinden.

In der Gebrauchslage des Spiegelgehäuses 20.9 schließen der Arm 31.9 und das Rastglied 10.9 im wesentlichen einen rechten Winkel ein (Fig. 27). Während des Abklappens des Spiegelgehäuses 20.9 nach hinten vergrößert sich der von dem Rastorgan 30.9 und dem Rastglied 10.9 eingeschlossene Winkel und nimmt in der hinteren Endlage des Spiegelgehäuse 20.9 nahezu einen gestrekten Winkel ein (Fig. 28). Dabei kann ein im einzelnen nicht dargestellter Ansatz am Rastglied 10.9 vorgesehen sein, der die Einnahme eines gestreckten Winkels zwischen Restglied 10.9 und Rastorgan 30.9 verhindert. Die hintere Endlage ist dann bei Anlage des Rastorgans 30.9 and den Ansatz des Rastglieds 10.9 erreicht.

Das Spiegelgehäuse 20.9 kann aus der hinteren Endlage (Fig. 25) durch nach vorne gerichteten Schlag auf das entfernte Ende 25.9 befreit werden, der dem Spiegelgehäuse einen Impuls von solcher Größe erteilt, daß die Haftreibung zwischen den Scheiben 14.9 und 41.9 einerseits und der Reibplatte 43.9 andererseits durch den Impuls und die Zugkraft der Zugfeder überwunden wird, und das Spiegelgehäuse demzufolge selbsttätig in seine Gebrauchslage (Fig. 24) zurückkehrt. Diese Ausführungsform der Erfindung hat gegenüber den vorbeschriebenen Ausführungsformen den zusätzlichen Vorteil, daß das Spiegelgehäuse 20.9 aus der befreiten hinteren Endlage langsamer in seine Gebrauchslage zurückkehrt, als dies ohne den wechselseitigen Eingriff zwischen der Reibplatte 42.9 einerseits und dem Rastorgan 30.9 bzw. dem Rastglied 10.9 andererseits möglich wäre. Durch den weiteren Umstand, daß die Zugkraft der Zugfeder nur wenig größer als die Gleitreibung zwischen den Scheiben 14.9 und 41.9 einerseits und der Reibplatte 42.9 anderseits ist, können Finger zwischen dem abgebogenen vorderen Rand 21.9 des Spiegelgehäuses 20.9 und der gegenüberliegenden Randpartie nicht mehr eingeklemmt werden, weil eventuell gefährdete Finger rechtzeitig vor Einnahme der Gebrauchslage zurückgezogen werden können und außerdem die durch den vorderen Rand 21.9 gegebenenfalls ausgeübte Klemmkraft wesentlich geringer als bisher üblicher ist.

Bei der in Fig. 29 bis 31 dargestellten, zehnten Ausführungsform des Außenspiegels ist ein Rastorgan 30.10 an Gabeln 5.10, 8.10 einer Halteplatte 4.10 des Spiegelfusses 1.10 um eine zur Klappachse des spiegelgehäuses 20.10 parallele Achse verschwenkbar angelenkt. Die Schwenkwelle 32.10, auf der der Schwenkarm 31.10 sitzt, sit an den ganz in das Innere des Spiegelgehäuses 20.10 reichenden Enden der Gabeln 5.10, 8.10 gehalten. Der Schwenkarm 31.10 erstreckt sich in Richtung auf die Randpartie 2.10 des Spiegelfusses 1.10 für den vorderen Randabschnitt 21.10 des Spiegelgehäuses 20.10 mit einer gekrümmten vorderen Außenkontur. Das freie Ende des Schwenkarmes 31.10 reicht mit einer Nase 37.10 in einen Längsschlitz 3.10 im Spiegelfuß 1.10 der sich quer zur Klappachse des Spiegelgehäuses von vorne nach hinten erstreckt und in der Nähe der Randpartie 2.10 für den vorderen Randabschnitt 21.10 endet.

Der Schwenkarm 31.10 steht unter Belastung einer Spiralfeder 16.10, welche sich in Richtung des Längsschlitzes 3.10 erstreckt und in einer Tasche 9.10 des Spiegelfusses 1.10 beherbergt ist. Die Feder 16.10 drückt den Schwenkarm 31.10 nach vorne, so daß in der in Fig. 30 dargestellten abgeklappten Endlage des Spiegelgehäuses 20.10 die Nase 37.10 des Schwenkarms gegen die vordere Innenfläche des Längsschlitzes 3.10 anliegt und die eine nach vorne weisende Schulter 35.10 des Schwenkarms 31.10 auf der Randpartie 2.10 aufsitzt.

Wenn das Spiegelgehäuse 20.10 nach rückwärts abklappt, bleibt der Schwenkarm 31.10 unter dem Druck der Feder 16.10 in Richtung auf die vordere Innenfläche des Schlitzes 3.10 gedrückt, so daß die Innenseite des vorderen Randabschnittes 21.10 auf der gebogenen Außenkontur reitet, bis der vordere Randabschnitt 21.10 mit seiner balligen Kontur in eine am Schwenkarm 31.10 in der Nähe der Schwenkwelle 32.10 ausgebildeten Falle 33.10 einfällt. Der Schwenkarm 31.10 wird beim Abklappen des Spiegelgehäuses dabei durch die Feder 16.10 ständig nach vorne gedrückt. Die abgeklappte Endlage ist daher durch Einfallen des vorderen Randabschnittes 21.10 in die Falle 33.10 definiert.

Zum Entriegeln des Spiegelgehäuses 20.10 aus der Endlage (Fig. 30) wird ein nach vorne gerichteter kleiner Schlag auf dieses ausgeübt, der den vorderen Randabschnitt 21.10 aus der Falle 33.10 befreit und das Spiegelgehäuse langsam unter der Wirkung der Zugfeder in die Gebrauchslage (Fig. 29) zurückkehren läßt. Die Langsamkeit der Zurückkehrbewegung des Spiegelgehäuses 20.10 wird durch den Reibschluß zwischen der gebogenen Außenkontur des Schwenkarmes 31.10 und der Innenseite des vorderen Randabschnittes 21.10 bewirkt. Mit dem Freikommen des vorderen Randabschnittes 21.10 aus der Falle wird der Schwenkarm 31.10 gegen die Wirkung der Feder 16.10 gleichzeitig soweit nach rückwärts verschwenkt, daß die Schulter 35.10 aus der Anlage und den Spiegelfuß 1.10 frei kommt.

**Patentansprüche**

1. Außenspiegel für ein Fahrzeug mit einem Spiegelfuß (1.1 ... 1.10) und einem relativ zum Spiegelfuß aus einer Gebrauchslage nach vorne und hinten abklappbaren Spiegelgehäsue (20.1 ... 20.10), welches mittels einer Zugfeder (51) in Gebrauchslage am Spiegelfuß gehalten ist, wobei ein Spiegelgehäuserand (21.1 ... 21.6, 21.9, 21.10) gegen den Rand (2.1 ... 2.10) des Spiegelfusses anliegt sowie mit einem Rastglied (10.1 ... 10.10), wobei in einer definierten Endlage des angeklappten Spiegelgehäuses ein Rastorgan (30.1 ... 30.10) und das Rastglied lösbar eingerastet sind, dadurch gekennzeichnet, daß das Rastorgan sowie das Rastglied (10.1 ... 10.10) auf dem Rückkehrweg des Spiegelgehäuses (20.1 ... 20.10) aus der Endlage in federbelastete Anlage aneinander gelangen.

2. Außenspiegel nach Anspruch 1, dadurch gekennzeichnet, daß das Rastorgan einen Anschlag (34.1 ... 34.7) derart aufweist, daß bei Anlage des Rastgliedes (10.1 ... 10.10) an den Anschlag der Spiegelgehäuserand (21.1 ... 21.7) einen Sicherheitsabstand (d) zum benachbarten Rand (2.1 ... 2.7) des Spiegelfusses (1.1 ... 1.7) besitzt.

3. Außenspiegel nach Anspruch 2, dadurch gekennzeichnet, daß der Anschlag an einem Rastorgan (30.1 ... 30.10) ausgebildet ist, welches am Spiegelfuß oder am Spiegelgehäuse befestigt ist und von einem am Spiegelfuß oder Spiegelgehäuse befestigten Rastglied (10.1 ... 10.10) ergriffen ist.

4. Außenspiegel nach einem der vorstehenden Ansprüche, dadurch gekennzeichnet, daß das Rastglied ein axial doppelkegelig durchbohrter, weichelastischer Einsatz (11.1) ist, der in einer spiegelfußseitigen Öffnung (23.1) des Spiegelgehäuses (20.1) sitzt, wobei die Durchbohrung eine kugelige Erweiterung (12.1) aufweist, und daß das Rastorgan ein am Ende ballig gestalteter, am Spiegelfuß angelenkter Arm (31.1) ist, der die Durchgangsbohrung durchdringt.

5. Außenspiegel nach Anspruch 4, dadurch gekennzeichnet, daß der Arm (31.1) etwa in der Mitte seiner Länge den Anschlag (34.1) trägt, der in die Erweiterung (12.1) lösbar einrastbar ist.

6. Außenspiegel nach einem der Ansprüche 1 - 3, dadurch gekennzeichnet, daß das Rastglied ein eine spiegelfußseitige Öffnung (23.2) des Spiegelgehäuses (20.2) überspannender Federstab (11.2) ist, welcher auf der Oberseite eines plattenförmigen, am Spiegelfuß befestigten Rastorgans (30.2) reitet, wobei die Oberseite wenigstens am freien Ende eine erste Nut (33.2) aufweist.

7. Außenspiegel nach Anspruch 6, dadurch gekennzeichnet, daß das plattenförmige Rastorgan (31.2) von einer aus dem Spiegelgehäuse (20.2) gegenüber dem Federstab (11.2) vorstehenden Rippe (35.2) unterfaßt ist.

8. Außenspiegel nach Anspruch 6 oder 7, dadurch gekennzeichnet, daß das plattenförmige Rastorgan (31.2) etwa in der Mitte seiner Länge eine zweite Nut (34.2) als Anschlag aufweist.

9. Außenspiegel nach einem der Ansprüche 6 - 8, dadurch gekennzeichnet, daß das plattenförmige Rastorgan nach rückwärts gebogen ist.

10. Außenspiegel nach einem der Ansprüche 6 oder 7, dadurch gekennzeichnet, daß parallel zu dem Federstab (11.3) ein weiterer Federstab (13.3) in der spiegelfußseitigen Öffnung (23.3) des Gehäuses (20.3) vorgesehen ist, welcher auf der Unterseite des Rastorgans reitet.

11. Außenspiegel nach Anspruch 10, dadurch gekennzeichnet, daß das Rastorgan ein langgestreckter, am Spiegelfuß (1.3) angelenkter Stab (31.3) ist, welcher am freien Ende eine breite Stoppplatte (36.3) trägt und mit Abstand von der Stoppplatte eine erste Verdickung (33.3) sowie etwa in der Mitte seiner Länge eine zweite Verdickung (34.3) aufweist, wobei die beiden Verdickungen von den Federstäben (11.3, 13.3) überwindbar sind.

12. Außenspiegel nach Anspruch 11, dadurch gekennzeichnet, daß die Verdickungen mit Auflaufflächen (37.3, 38.3, 39.3, 40.3) versehen sind, wobei die vom Spiegelfuß (1.3) wegweisenden Auflaufflächen (38.3, 40.3) eine größere Steigung als die zum Spiegelfuß (1.3) weisenden Auflaufflächen (37.3, 39.3) haben.

13. Außenspiegel nach einem der vorstehenden Ansprüche, dadurch gekennzeichnet, daß das Rastorgan (30.4) ein am Spiegelfuß (1.4) angelenkter Stab (30.4) ist, welcher in der Nähe seines Endes eine erste Verdickung (33.3) sowie etwa in seiner Mitte eine zweite Verdickung (34.3) als Anschlag trägt, und daß das Rastglied eine axial durchbohrte und am Spiegelgehäuse (20.4) schwenkbar befestigte Buchse (10.4) ist, welche radial elastische, an der Peripherie des Rastorgans (30.4) anliegende Rastelemente (11.4, 13.4) aufweist.

14. Außenspiegel nach Anspruch 13, dadurch gekennzeichnet, daß die Rastsegmente (11.4, 13.4) an der auf den Arm (31.4) zuweisenden Fläche entsprechend der Form der Verdickungen (33.3, 34.3) profilierte sind.

15. Außenspiegel nach einem der vorstehenden Ansprüche, dadurch gekennzeichnet, daß das Rastglied eine am Spiegelgehäuse (20.5) schwenkbar befestigte Scheibe (40.5) mit axial vorstehender Nase (11.5) ist, welche gegen eine mit einer der Nase entsprechenden Nut (33.5, 35.5) versehene Rastscheibe (41.5) am freien Ende eines als Schwenkarm (31.5) ausgebildeten Rastorgans (30.5) unter Belastung einer Feder (16.5) anliegt.

16. Außenspiegel nach Anspruch 15, dadurch gekennzeichnet, daß die Rastscheibe zwei umfangmäßig beabstandete Nuten (33.5, 34.5) aufweist.

17. Außenspiegel nach einem der vorstehenden Ansprüche, dadurch gekennzeichnet, daß das Spiegelgehäuse (20.6) mittels eines wenigstens ein Scharnierband (10.6) aufweisenden Gelenks (7.6) mit dem Spiegelfuß (1.6) verbunden ist, und daß das Scharnierband eine vorstehende Warze (11.6) aufweist, in deren Weg eine am Spiegelfuß (1.6) befestigte Blattfeder (30.6) mit vorstehender Nase (33.6) ragt.

18. Außenspiegel nach einem der vorstehenden Ansprüche, dadurch gekennzeichnet, daß in den Spiegelfuß (1.6) ein Anschlagkörper (34.6) mit Durchgangsöffnung eingelassen ist,welche von zwei Paaren gegenüberliegender Anlaufflächen (39.6, 40.6) begrenzt ist, wobei die Steigung der Anlaufflächen (39.6) eines Paares größer ist als die des anderen Paares (40.6).

19. Außenspiegel nach Anspruch 18, dadurch gekennzeichnet, daß an dem Spiegelgehäuse (20.6) zwei beabstandete, auf den Spiegelfuß (1.6) zuweisende Pfosten (54.6, 55) gehalten sind, welche fluchtend durchbohrt sind, wobei in jeder der Bohrung je ein am freien Ende abgeschrägter Rastzapfen (17.5, 18.5) axial verschiebbar gehalten ist.

20. Außenspiege lnach Anspruch 19, dadurch gekennzeichnet, daß die beiden Anschlagzapfen (17.5, 18.5) von einer gemeinsamen Feder (19.5) beaufschlagt sind.

21. Außenspiegel nach einem der Ansprüche 17 bis 20, dadurch gekennzeichnet, daß das Spiegelgehäuse (20.7) an dem Spiegelfuß (1.7) über ein zweites, vorderes, wenigstens ein Scharnierband aufweisendes Scharniergelenk (9.7) befestigt ist, wobei das Scharnierband eine Warze aufweist, in deren Weg eine weitere Blattfeder mit vorstehender Nase ragt (Fig. 20).

22. Außenspiegel nach einem der vorstehenden Ansprüche, dadurch gekennzeichnet, daß das Rastglied eine zweischenlige Drahtfeder (11.8) ist und daß das Rastorgan (30.8) am freien Ende einen haubenförmigen Rastkörper (33.8) trägt, welcher in der Endlage von der Drahtfeder hintergriffen ist.

23. Außenspiegel nach Anspruch 22, dadurch gekennzeichnet, daß die Drahtfeder an einer zum Spiegelgehäuse (20.8) weisenden Spiegelfußplatte (4.8) und das Rastorgan (30.8) im Spiegelgehäuse (20.8) befestigt sind.

24. Außenspiegel nach Anspruch 22 oder 23, dadurch gekennzeichnet, daß das Rastorgan (30.8) ein hakenförmiges Ende (35.8) mit der Verdickung aufweist, welches in eine Ausnehmung (3.8) des Spiegelfußes (1.8) eintaucht.

25. Außenspiegel nach einem der vorstehenden Ansprüche, dadurch gekennzeichnet, daß das Rastglied (10.9) um zwei zueinander senkrechte Achsen mittels eines Gelenks (15.9) im Inneren des Spiegelgehäuses (20.9) angelenkt und mit einer Scheibe (14.9) versehen ist, daß das Rastorgan (30.9) eine Rastscheibe(41.9) gleicher radialer Abmessung wie die Scheibe (14.9) trägt, und daß zwischen die Scheibe (14.9) und die Rastscheibe (41.9) eine Reibplatte (42.9) eingeschlossen ist, wobei die Scheiben und die Reibplatte durch ein Niet (43.9) zusammengehalten sind.

26. Außenspiegel nach einem der vorstehenden Ansprüche, dadurch gekennzeichnet, daß an einer vom Spiegelfuß (1.10) in Richtung auf das Spiegelgehäuse (20.10) vorstehenden Gabel (5.10, 8.10) ein auf den Spiegelfuß (1.10) zuweisender Schwenkhebel (31.10) angelenkt ist, der mit einer Nase (37.10) in einen Schlitz (3.10) im Spiegelfuß (1.10) eintaucht und von einer am spiegelfuß (1.10) beherbergten Feder (16.10) in Richtung auf einen Randabschnitt (21.10) des Spiegelgehäuses (20.10) beaufschlagt ist und in der Nähe seiner Anlenkung mit einer Falle (33.10) für den Randabschnitt (21.10) versehen ist.

## Claims

1. An external mirror for a motor vehicle comprising a mirror base (1.1 ... 1.10) and a mirror housing (20.1 ... 20.10), which can be pivoted forwards and backwards relative to the mirror base out of an operative position and is held in the operative position on the mirror base by means of a tension spring (51), a mirror housing edge (21.1 ... 21.6, 21.9, 21.10) resting against the edge (2.1 ... 2.10) of the mirror base, and comprising a locking member (10.1 ... 10.10), a locking device (30.1 ... 30.10) and the locking member being releasably locked in a defined end position of the folded mirror housing, characterised in that the locking device and the locking member (10.1 ... 10.10) move into a spring-loaded abutment against one another on the return path of the mirror housing (20.1 ... 20.10) from the end position.

2. An external mirror according to claim 1, characterised in that the locking device comprises a stop (34.1 ... 34.7) in such a manner that, when the locking member (10.1 ... 10.10) rests against the stop, the mirror housing edge (21.1 ... 21.7) lies at a safety distance (d) from the adjacent edge (2.1 ... 2.7) of the mirror base (1.1 ... 1.7).

3. An external mirror according to claim 2, characterised in that the stop is formed on a locking device (30.1 ... 30.10), which is secured to the mirror base or mirror housing and is grasped by a locking member (10.1 ... 10.10) secured to the mirror base or mirror housing.

4. An external mirror according to one of the preceding claims, characterised in that the locking member is a double-cone axially bored soft-elastic insert (11.1), which sits in an opening (23.1) on the mirror base-side of the mirror housing (20.1), the through bore having a spherical enlarged section (12.1), and the locking device is an arm (31.1), which is ball-shaped at the end, is articulatedly connected to the mirror base and penetrates the through bore.

5. An external mirror according to claim 4, characterised in that, approximately in the centre of its length the arm (31.1) supports the stop (34.1), which is releasably lockable in the enlarged section (12.1).

6. An external mirror according to one of claims 1 to 3, characterised in that the locking member is a spring rod (11.2), which spans an opening (23.2) in the mirror base-side of the mirror housing (20.2) and rides on the upper side of a plate-shaped locking device (30.2) secured to the mirror base, the upper side at least comprising a first groove (33.2) on the free end.

7. An external mirror according to claim 6, characterised in that a rib (35.2) projecting from the mirror housing (20.2) opposite to the spring rod (11.2) engages underneath the plate-shaped locking device (31.2).

8. An external mirror according to claim 6 or 7, characterised in that, approximately in the centre of its length the plate-shaped locking device (31.2) comprises a second groove (34.2) as a stop.

9. An external mirror according to one of claims 6 to 8, characterised in that the plate-shaped locking device is curved backwards.

10. An external mirror according to one of claims 6 or 7, characterised in that parallel to the spring rod (11.3) a further spring rod (13.3) is provided in the opening (23.3) in the mirror base-side of the housing (20.3) and rides on the underside of the locking device.

11. An external mirror according to claim 10, characterised in that the locking device is an elongated rod (31.3), which is articulatedly connected to the mirror base (1.3) and which at its free end supports a broad stop plate (36,3) and at a distance from the stop plate a first thickened portion (33.3) and approximately in the centre of its length a second thickened portion (34.3), the spring rods (11.3, 13.3) being able to overcome the two thickened portions.

12. An external mirror according to claim 11, characterised in that the thickened portions are provided with ramp surfaces (37.3, 38.3, 39.3, 40.3), the ramp surfaces (38.3, 40.3) facing away from the mirror base (1.3) having a greater angle of inclination than the ramp surfaces (37.3, 39.3) facing the mirror base (1.3).

13. An external mirror according to one of the preceding claims, characterised in that the locking device (30.4) is a rod (30.4), which is articulatedly connected to the mirror base (1.4) and which in the vicinity of its end supports a first thickened portion (33.3) (sic) and approximately in its centre a second thickened portion (34.3) (sic) as a stop, and the locking member is a axially bored bushing (10.4), which is pivotably secured to the mirror housing (20.4) and comprises radial elastic locking elements (11.4, 13.4) resting against the periphery of the locking device (30.4).

14. An external mirror according to claim 13, characterised in that, on the surface facing the arm (31.4), the locking segments (11.4, 13.4) are profiled to match the shape of the thickened portions (33.3, 34.3).

15. An external mirror according to one of the preceding claims, characterised in that the locking member is disc (40.5) (sic) pivotably secured to the mirror housing (20.5) and comprising an axially projecting nose (11.5), which rests loaded by a spring (16.5) against a locking disc (41.5) provided with a groove (33.5, 35.5) corresponding to the nose at the free end of a locking device (30.5) designed as a pivot arm (31.5).

16. An external mirror according to claim 15, characterised in that the locking disc comprises two grooves (33.5, 34.5) circumferentially spaced apart.

17. An external mirror according to one of the preceding claims, characterised in that the mirror housing (20.6) is connected with the mirror base (1.6) by means of a hinge (7.6) comprising at least one hinge frame (10.6), and the hinge frame comprises a projecting lug (11.6), into whose path projects a leaf spring (30.6) secured to the mirror base (1.6) with a projecting nose (33.6).

18. An external mirror according to one of the preceding claims, characterised in that an abutment element (34.6) with a through opening is arranged in the mirror base (1.6), the through opening being defined by two pairs of opposite ramp surfaces (39.6, 40.6), the angle of inclination of the ramp surfaces (39.6) of one pair being greater than that of the other pair (40.6).

19. An external mirror according to claim 18, characterised in that two posts (54.6, 55) spaced apart and facing the mirror base (1.6) are held on the mirror housing (20.6) and comprise aligned through bores, a locking journal (17.5, 18.5) bevelled at its free end being axially displaceably held in each bore.

20. An external mirror according to claim 19, characterised in that the two stop journals (17.5, 18.5) are acted upon by a common spring (19.5).

21. An external mirror according to one of claims 17 to 20, characterised in that the mirror housing (20.7) is secured to the mirror base (1.7) via a second, front hinge joint (9.7) comprising at least one hinge frame, the hinge frame comprising a lug, into whose path a further leaf spring having a projecting nose projects (Fig. 20).

22. An external mirror according to one of the preceding claims, characterised in that the locking member is a double-limb wire spring (11.8) and at its free end the locking device (30.8) supports a hood-shaped locking body (33.8), behind which the wire spring engages in the end position.

23. An external mirror according to claim 22, characterised in that the wire spring is secured to a mirror base plate (4.8) pointing towards the mirror housing (20.8) and the locking device (30.8) is secured within the mirror housing (20.8).

24. An external mirror according to claim 22 or 23, characterised in that the locking device (30.8) comprises a hook-shaped end (35.8) with the thickened portion, which end penetrates a recess (3.8) in the mirror base (1.8).

25. An external mirror according to one of the preceding claims, characterised in that the locking member (10.9) is articulated connected inside the mirror housing (20.9) so as to pivot about two axes perpendicular to one another by means of a hinge (15.9) and is provided with a disc (14.9), the locking device (30.9) supports a locking disc (41.9) having the same radial dimension as the disc (14.9), and enclosed between the disc (14.9) and the locking disc (41.9) is a friction plate (42.9), the discs and the friction plate being held together by a rivet (43.9).

26. An external mirror according to one of the preceding claims, characterised in that articulatedly connected to a fork (5.10, 8.10) projecting from the mirror base (1.10) in the direction of the mirror housing (20.10) is a pivot lever (31.10) pointing towards the mirror base (1.10), which pivot lever penetrates with a nose (37.10) a slot (3.10) in the mirror base (1.10) and is acted upon by a spring (16.10) accommodated in the mirror base (1.10) in the direction of an edge section (21.10) of the mirror housing (20.10) and is provided in the vicinity of its hinge connection with a catch (33.10) for the edge section (21.10).

**Revendications**

1. Rétroviseur extérieur pour un véhicule avec un pied de rétroviseur (1.1 ... 1.10) et un boîtier de rétroviseur (20.1 ... 20.10) rabattable vers l'avant et l'arrière par rapport au pied de rétroviseur à partir d'une position d'utilisation, qui est maintenu en position d'utilisation sur le pied de rétroviseur au moyen d'un ressort de traction (51), un bord du boîtier de rétroviseur (21.1 ... 21.6), 21.9, 21.10) reposant contre le bord (2.1 ... 2.10) du pied de rétroviseur, et avec un élément d'enclenchement (10.1 ... 10.10), un organe d'enclenchement (30.1 ... 30.10) et l'élément d'enclenchement étant enclenchés de façon détachable dans une position extrême définie du boîtier de rétroviseur rabattu, caractérisé en ce que sur le parcours de retour du boîtier de rétroviseur (20.1 ... 20.10) de la position extrême l'organe d'enclenchement ainsi que l'élément d'enclenchement (10.1 ... 10.10) arrivent l'un contre l'autre en appui à sollicitation élastique.

2. Rétroviseur extérieur selon la revendication 1, caractérisé en ce que l'organe d'enclenchement présente une butée (31.1 ... 34.7) de telle sorte que lors de l'appui de l'élément d'enclenchement contre la butée le bord du boîtier de rétroviseur (21.1 ... 21.7) possède une distance de sécurité (d) par rapport au bord voisin (2.1 ... 2.7) du pied de rétroviseur (1.1 ... 1.7).

3. Rétroviseur extérieur salon la revendication 2, caractérisé an ce que la butée est développée sur un organe d'enclenchement (30.1 ... 30.10) qui est fixé au pied de rétroviseur ou au boîtier de rétroviseur et est engagé par un élément d'enclenchement (10.1 ... 10.10) fixé au pied de rétroviseur au boîtier de rétroviseur.

4. Rétroviseur extérieur selon l'une des revendications précédentes, caractérisé en ce que l'élément d'enclenchement est un insert souple percé axialement à double cône (11.1) qui est monté dans une ouverture (23.1) côté pied de rétroviseur du boîtier de rétroviseur (20.1), le perçage présentant un élargissement conique (12.1) et l'organe d'enclenchement étant un bras de configuration bombée à l'extrémité, articulé au pied de rétroviseur, qui pénètre le perçage débouchant.

5. Rétroviseur extérieur selon la revendication 4, caractérisé en ce que le bras (31.1) porte à peu près au centre de sa longueur une butée (34.1), qui peut être enclenchée de façon détachable dans l'élargissement (12.1).

6. Rétroviseur extérieur selon l'une des revendications 1 à 3, caractérisé en ce que l'élément d'enclenchement est une tige à ressort (11.2) enjambant l'ouverture côté pied de rétroviseur (23.2) du boîtier de rétroviseur (20.2), qui chevauche sur le côté supérieur d'un organe d'enclenchement (30.2) en forme de plaque, fixé sur le pied de rétroviseur, le côté supérieur présentant au moins à l'extrémité libre une première rainure (33.2).

7. Rétroviseur extérieur selon la revendication 6, caractérisé en ce que l'organe d'enclenchement en forme de plaque (31.2) est soutenu par une nervure (35.2) dépassant du boîtier de rétroviseur (20.2) face à la tige à ressort (11.2).

8. Rétroviseur extérieur selon la revendication 6 ou 7, caractérisé en ce que l'organe d'enclenchement en forme de plaque (31.2) présente à peu près au centre de sa longueur une deuxième rainure (34.2) comme butée.

9. Rétroviseur extérieur selon l'une des revendications 6 à 8, caractérisé en ce que l'organe d'enclenchement en forme de plaque est recourbé vers l'arrière.

10. Rétroviseur extérieur selon l'une des revendications 6 ou 7, caractérisé en ce qu'il est prévu parallèlement à la tige à ressort (11.3) une autre tige à ressort (13.3) dans l'ouverture (23.3) côté pied de rétroviseur du boîtier (20.3), qui chevauche sur le côté inférieur de l'organe d'enclenchement.

11. Rétroviseur extérieur selon la revendication 10, caractérisé en ce que l'organe d'enclenchement est une tige allongée (31.3), articulée au pied de rétroviseur (1.3), qui porte à l'extrémité libre une large plaque d'arrêt (36.3) et présente avec une distance de la plaque d'arrêt un premier renflement (33.3) ainsi qu'à peu près au centre de sa longueur un deuxième renflement (34.3), les deux renflements étant surmontables par les tiges à ressort (11.3, 13.3).

12. Rétroviseur extérieur selon la revendication 11, caractérisé en ce que les renflements sont munis de surfaces de contact (37.3, 38.3, 39.3, 40.3), les surfaces de contact (38.3, 40.3) orientées opposées au pied de rétroviseur (1.3) ayant une inclinaison plus grande que les surfaces de contact (37.3, 39.3) orientées vers le pied de rétroviseur (1.3).

13. Rétroviseur extérieur selon l'une des revendications précédentes, caractérisé en ce que l'organe d'enclenchement (30.4) est une tige (30.4) articulée au pied de rétroviseur (1.4), qui porte à proximité de son extrémité un premier renflement (33.3) ainsi qu'à peu près dans son centre un deuxième renflement (34.3) comme butée, et en ce que l'élément d'enclenchement est une douille (10.4) percée axialement et fixée pivotante au boîtier de rétroviseur (20.4), qui présente des éléments d'enclenchement (11.4, 13.4) élastiques radialement, reposant sur la périphérie de l'organe d'enclenchement (30.4).

14. Rétroviseur extérieur selon la revendication 13, caractérisé en ce que les segments d'enclenchement (11.4, 13.4) sont profilés sur la surface orientée vers le bras (31.4) de façon correspondante à la forme des renflements (33.3, 34.3).

15. Rétroviseur extérieur selon l'une des revendications précédentes, caractérisé en ce que l'élément d'enclenchement est un disque (40.5) fixé pivotant au boîtier de rétroviseur (20.5) avec un tenon dépassant axialement (11.5), qui repose contre un disque d'enclenchement (41.5) muni d'une rainure (33.5, 35.5) correspondant au tenon à l'extrémité libre d'un organe d'enclenchement (30.5) conçu comme bras pivotant (31.5) sous la charge d'un ressort (16.5).

16. Rétroviseur extérieur selon la revendication 15, caractérisé en ce que le disque d'enclenchement présente deux rainures (33.5, 34.5) avec un écart entre leurs périphéries.

17. Rétroviseur extérieur selon l'une des revendications précédentes, caractérisé en ce que le boîtier de rétroviseur (20.6) est relié au pied de rétroviseur (11.6) au moyen d'une bande de charnière (10.6) au moins et en ce que la bande de charnière présente un bouton dépassant (11.6) dans le parcours duquel un ressort à lames (30.6) fixé au pied de rétroviseur (1.6) avec un tenon dépassant (33.6) fait saillie.

18. Rétroviseur extérieur selon l'une des revendications précédentes, caractérisé en ce que dans le pied de rétroviseur (1.6) il est introduit un corps de butée (34.6) avec ouverture débouchante qui est limitée par deux paires de surfaces de contact opposées (39.6, 40.6), l'inclinaison des surfaces de contact (39.6) d'une paire étant plus grande que celle de l'autre paire (40.6).

19. Rétroviseur extérieur selon la revendication 18, caractérisé en ce que sur le boîtier de rétroviseur (20.6) deux montants (54.6, 55) écartés, orientés vers le boîtier de rétroviseur (20.6) sont maintenus, qui sont percés en alignement, un tourillon d'enclenchement chanfreiné (17.5, 18.5) étant maintenu décalable axialement à l'extrémité libre dans chacun des perçages.

20. Rétroviseur extérieur selon la revendication 19, caractérisé en ce que les deux tourillons à butée (17.5, 18.5) sont sollicités par un ressort commun (19.5).

21. Rétroviseur extérieur selon l'une des revendications 17 à 20, caractérisé en ce que le boîtier de rétroviseur (20.7) est fixé au pied de rétroviseur (1.7) par l'intermédiaire d'une deuxième articulation à charnière avant (9.7), présentant une bande de charnière au moins, la bande de charnière présentant un bouton dans le parcours duquel un autre ressort à lames avec tenon dépassant fait saillie (Fig. 20).

22. Rétroviseur extérieur selon l'une des revendications précédentes, caractérisé en ce que l'élément d'enclenchement est un ressort à boudin à deux branches (11.8) et en ce que l'organe d'enclenchement (30.8) porte à l'extrémité libre un corps d'enclenchement en forme de calotte (33.8), qui dans la position extrême est engagé à l'arrière par le ressort à boudin.

23. Rétroviseur extérieur selon la revendication 22, caractérisé en ce que le ressort à boudin est fixé à une plaque de pied de rétroviseur (4.8) orientée vers le boîtier de rétroviseur (20.8) et l'organe d'enclenchement (30.8) dans le boîtier de rétroviseur (20.8).

24. Rétroviseur extérieur selon la revendication 22 ou 23, caractérisé en ce que l'organe d'enclenchement (30.8) présente une extrémité en forme de crochet (35.8) avec le renflement qui plonge dans un évidement (3.8) du pied de rétroviseur (1.8).

25. Rétroviseur extérieur selon l'une des revendications précédentes, caractérisé en ce que l'organe d'enclenchement (10.9) est articulé autour de deux axes perpendiculaires l'un par rapport à l'autre au moyen d'une articulation (15.9) dans l'intérieur du boîtier de rétroviseur (20.9) et muni d'un disque (14.9), en ce que l'organe d'enclenchement (30.9) porte un disque d'enclenchement (41.9) de même dimension radiale que le disque (14.9) et en ce qu'une plaque de friction (42.9) est incluse entre le disque (14.9) et le disque d'enclenchement (41.9), les disques et la plaque de friction (42.9) étant maintenus ensemble par un rivet (43.9).

26. Rétroviseur extérieur selon l'une des revendications précédentes, caractérisé en ce qu'à une fourchette (4.10, 8.10) dépassant du pied de rétroviseur (1.10) en direction du boîtier de rétroviseur (20.10) est articulé un levier pivotant (31.10) orienté vers le pied de rétroviseur (1.10), qui plonge avec un tenon (37.10) dans une fente (3.10) dans le pied de rétroviseur (1.10) et est sollicité par un ressort (16.10) abrité sur le pied de rétroviseur (1.10) en direction d'une section de bord avant (21.10) du boîtier de rétroviseur (20.10) et est muni à proximité de son articulation d'une trappe (33.10) pour la section de bord avant (21.10).

Fig. 1

Fig. 2

Fig. 3

Fig. 4

Fig. 5

Schnitt: C-C

Fig. 8

Ansicht: U

26.3
13.3
10.3
36.3 11.3

Fig. 7

20.3

31.3 3.3
37.3
40.3 34.3
33.3
36.3
13.3
26.3
21.3
2.3

Fig. 6

20.3

U →

26.3
13.3 10.3
36.3 33.3
34.3
30.3 34.3
32.3
13.2
3.3

19

Fig. 15

Fig. 13

Fig. 14

EP 0 305 578 B1

Fig. 19

Fig. 16

Fig. 17

22

Fig. 20

Fig. 18

EP 0 305 578 B1

Fig. 23

Fig. 22

Fig. 21

Ansicht: Z

24

Fig. 24

Fig. 27

Ansicht: Y

Fig. 26

Schnitt: E-E

Fig. 25

Fig. 28

Ansicht: X

Fig. 31

Schnitt: D-D

31.10
32.10
5.10
8.10
31.10
4.10
16.10

Fig. 30

20.10

32.10
21.10
5.10
31.10 16.10
2.10
1.10
37.10
3.10

Fig. 29

20.10

D

5.10

33.10 30.10
31.10 21.10
2.10
1.10
35.10
3.10
37.10
16.10

D

27